(19)

Europäisches
Patentamt

European
Patent Office

Office européen
des brevets

(11) **EP 4 645 154 A1**

(12) # EUROPEAN PATENT APPLICATION

(43) Date of publication:
**05.11.2025 Bulletin 2025/45**

(21) Application number: **25173518.9**

(22) Date of filing: **30.04.2025**

(51) International Patent Classification (IPC):
*G06F 30/23* (2020.01)     *G06F 30/27* (2020.01)

(52) Cooperative Patent Classification (CPC):
**G06F 30/27; G06F 30/23**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **30.04.2024 US 202463640482 P**

(71) Applicant: **DASSAULT SYSTEMES AMERICAS CORP.**
**Waltham, MA 02451 (US)**

(72) Inventors:
- **BI, Jing**
  **Foxborough (US)**
- **OANCEA, Victor George**
  **East Greenwich (US)**

(74) Representative: **Bandpay & Greuter**
**11, rue Christophe Colomb**
**75008 Paris (FR)**

(54) **SYSTEMS AND METHODS FOR NEURAL NETWORK BASED BEHAVIOR DETERMINATION OF A PHYSICAL OBJECT**

(57)     Embodiments perform neural network based behavior determination of physical objects. One such embodiment processes a three-dimensional (3D) numerical-method model representing a physical object to extract (i) 3D geometric data associated with the physical object and (ii) simulation data. The extracted 3D geometric data and simulation data are transformed into a 3D multi-graph. The 3D multi-graph is processed with one or more deep neural network (DNN) and one or more operators to determine behavior of the physical object.

EP 4 645 154 A1

**Description**

BACKGROUND

A number of existing product and simulation systems are offered on the market for the design and simulation of objects, *e.g.,* vehicles. Such systems typically employ computer aided design (CAD) and computer aided engineering (CAE) programs. These systems allow a user to construct, manipulate, and simulate complex three-dimensional models of objects or assemblies of objects. These CAD and CAE systems provide a model representation of objects, *e.g.,* real-world objects, using edges or lines, in certain cases with faces. Lines, edges, faces, or polygons may be represented in various manners, *e.g.,* nonuniform rational basis-splines (NURBS).

Such systems manage parts or assemblies of parts of modeled objects, which are mainly specifications of geometry. In particular, CAD files contain specifications, from which geometry is generated. From geometry, a three-dimensional (3D) CAD model or model representation is generated.

The advent of CAD and CAE systems allows for a wide range of representation possibilities for objects. Example computer-based models used by CAD and CAE systems include CAD models and finite element (FE) models (*i.e.,* meshes). A computer-based model may be programmed in such a way that the model has the properties (*e.g.,* physical, material, or other physics-based) of the underlying real-world object or objects that the model represents. Example properties include stiffness (ratio of force to displacement), plasticity (irreversible strain), and viscosity (resistance to flow of one layer over an adjacent layer), among other examples. When a CAD or other such computer-based model as is known in the art, is programmed in such a way, it may be used to perform simulations of the object that the model represents. For example, a mesh-based model may be used to represent the interior cavity of a vehicle, the acoustic fluid surrounding a structure, or any number of real-world objects. Moreover, CAD and CAE systems, along with computer-based models, can be utilized to simulate engineering systems, such as real-world physical systems, *e.g.,* cars, airplanes, buildings, and bridges, among other examples. Further, CAE systems can be employed to simulate any variety and combination of behaviors of these physics-based systems, such as noise and vibration.

SUMMARY

A technical problem in existing computer-based systems, *e.g.,* FE systems, that determine object behavior is how to learn 3D object geometries using a technique that is generalizable for a variety of physics problems with complex material properties and interactions. Another technical problem in conventional systems is how to avoid employing pre-labeled parameters, which may lack information needed to, *e.g.,* adapt to new geometric features. Yet another technical problem in traditional systems is how to leverage historical physics-based data in machine learning (ML) solutions without repeatedly performing computationally-expensive physics calculations. Past implementations for determining object behavior have not addressed these challenges. Therefore, functionality with improved accuracy, flexibility, and efficiency is needed. Embodiments provide such functionality.

Embodiments are discussed herein in the context of FE solutions as the source of data for training purposes to provide a specific illustration of how example embodiments work. However, embodiments can be implemented with simulation data coming from any other simulation technologies including, but not limited to, finite volume, Lattice Boltzman, Statistical Energy Analyses, and so on. These techniques may be referred to collectively as Traditional Numerical Methods (TNM).

Embodiments integrate information learned from, *e.g.*: (a) 3D geometries of previously existing designs (*e.g.,* designs similar to an object for which behavior is being determined); (b) computer-based, *e.g.,* finite element, models, and architectures including, but not limited to, nodes, element topological connectivities, boundary conditions, loading conditions, material properties, constraints, and/or contact interactions; and/or (c) simulation, *e.g.,* finite element, solutions and physics results at specific locations in space and specific time instances. Embodiments may then construct a graph/multi-graph representation of the same designs via 3D graphs, sequences, parts, and/or assemblies. Embodiments learn from local and global FE model mesh-based results and physics solutions data and predict, for a new design represented by mesh discretization, a physics solution in a small fraction of time as compared to traditional FE analyses.

Among other distinctions, embodiments differ from anything else in the literature and public domain in that embodiments integrate learning of 3D geometries and learning of FE solvers. Further, embodiments utilize existing FE model architectures used to solve industrial multi-physics multi-scale problems to construct detailed 3D model representations, 3D graphs, time sequences, specific accounting of industrial models, and/or specific features to build graph/multi-graph representations. Embodiments also provide a model that is continuously learnable and transferrably learnable given new geometries, material properties, and/or loading conditions, etc. and model inputs.

To train a generalizable ML model based on historical physics-based simulation data, a more advanced ML technique is needed. Embodiments provide such functionality. Embodiments may leverage information from previous already existing designs and/or associated physics-rich information existing from previous realistic industrial simulations, and may account for modeling techniques, *e.g.,* all modeling techniques, included in the physics-based models, *e.g.,* contact conditions, boundary conditions, constraints, and/or other special features. Subsequent assessments of new but similar design solutions can be generated, without having to re-run a large number of computationally expensive traditional physics-based solvers.

Embodiments solve the problems of existing approaches and provide modern ML techniques to understand 3D geometric designs and predict FE solutions much faster than running actual physics-based simulations.

Further, embodiments can generate virtual simulations of physical objects for use in, *e.g.,* computer games, engineering systems, product design (such as conceptual or detailed design), performance assessments, safety assessments, virtual reality systems, augmented reality systems, and computer simulators.

Embodiments can use TNM or physics-based solver model features in graph representations.

Further, embodiments can utilize known geometric parameters, *e.g.,* morphing, latent parameters, and shape descriptors at different levels, or non-geometric parameters.

Embodiments can employ neighbor aggregates, pooling (*e.g.,* of different types), and/or a regression-type architecture with flexible use of processing techniques/models such as Recurrent Neural Network(s) (RNN(s)), transformers, and operators.

Further, embodiments can generate a multi-graph representation for assemblies of parts that are connected, constrained, isolated, or contacted.

Embodiments can create time sequence representations with time dependent attributes.

Further, some embodiments relate to simulation.

Some embodiments may leverage combinations of different neural network architectures to enable effective and efficient model training with 3D graph representation(s) as an initial neural network input.

An example embodiment is directed to a computer-implemented method for neural network based behavior determination of physical objects. The method begins by processing a 3D numerical-method model representing a physical object to extract (i) 3D geometric data associated with the physical object and (ii) simulation data. Next, the method transforms the extracted 3D geometric data and simulation data into a 3D multi-graph. The 3D multi-graph is then processed with one or more deep neural network (DNN) and one or more operators to determine behavior, *e.g.,* any physics-based behavior (which may be referred to as a "key performance indicator" (KPI)) such as deformation, distortion, stress, strain, reaction forces, and time-dependent forces, etc., of the physical object.

In an example embodiment, the 3D numerical-method model may represent an assembly composed of multiple parts, connections between the multiple parts, and interactions between the multiple parts. According to one such embodiment, the assembly may be a vehicle, an aircraft, an antenna, a mitral valve, a structural system, a fluids system, an electromagnetics system, or an acoustics system, among other examples.

According to an example embodiment, the 3D numerical-method model may be a CAD model, FE model, finite volume model, Lattice Boltzman model, Statistical Energy Analyses model, or numerical method model.

In an example embodiment, the simulation data may include at least one of: a boundary condition, an excitation condition, an interaction condition, a physics quantity, and results from one or more numerical methods.

According to an example embodiment, transforming the extracted 3D geometric data and simulation data into the 3D multi-graph may include: (1) determining at least one of a sequence representation and a connection representation associated with the 3D numerical-method model and (2) representing the determined at least one sequence representation and connection representation in the 3D multi-graph.

An example embodiment may further include: (1) obtaining at least one model parameter and (2) including a representation of the obtained at least one model parameter in the 3D multi-graph. According to one such embodiment, the obtained at least one model parameter may pertain to a node level, a local level, or a multi-graph level. In another such embodiment, the obtained at least one model parameter may include at least one of: a CAD parameter, a morphing shape parameter, an encoded latent parameter, and a non-geometric parameter. According to yet another such embodiment, the non-geometric parameter may include at least one of: a material indicator, a thickness indicator, an indication of load magnitude, an indication of load direction, an indication of load speed, a sliding interaction condition, and a physics property.

According to an example embodiment, the one or more operators may include at least one of: a convolutional operator, an aggregation operator, an encoding operator, a decoding operator, a transformer operator, a normalization operator, a concatenation operator, an Einstein summation operator, a pooling operator, an unpooling operator, a dense pooling operator, a non-expressive sparse pooling operator, an expressive sparse pooling operator, and an operator network.

In an example embodiment, the determined behavior of the physical object may include a respective local behavior solution for each of a plurality of sub-components of the physical object. Such an embodiment may further include assembling each respective local behavior solution using at least one of encoding, pooling, and a regression, to determine global behavior of the physical object.

According to an example embodiment, processing the 3D multi-graph may include: iteratively (i) determining a predicted solution for the behavior of the physical object using a current neural network and current one or more operators, (ii) comparing the determined predicted solution with a solution of a numerical-method solver to determine an error metric, and (iii) based on the determined error metric, updating at least one of the one or more DNN and the one or more operators, until the determined predicted solution meets at least one convergence criterion. The determined predicted solution meeting the at least one convergence criterion may be the determined behavior of the physical object. In a first iteration the current neural network and current one or more operators may be the one or more DNN and the one or more operators. In a second and subsequent iterations the current neural network and current one or more operators may be the updated at least one of the one or more DNN and the one or more operators. In one such embodiment, the updating may include performing automatic differentiation.

In embodiments, the DNN may include any DNNs known in the art. According to an example embodiment, the one or more DNN may include at least one of: a Feedforward Neural Network (FNN), a Convolutional Neural Network (CNN), a Graph Neural Network (GNN), a RNN, and a Transformer Neural Network (TNN).

Another example embodiment is directed to a computer-based system for neural network based behavior determination of a physical object. The system includes a processor and a memory with computer code instructions stored thereon. The processor and the memory, with the computer code instructions, are configured to cause the system to implement any embodiments or combination of embodiments described herein.

Yet another embodiment is directed to a computer program product for neural network based behavior determination of a physical object. The computer program product includes a non-transitory computer-readable medium with computer code instructions stored thereon. The computer code instructions are configured, when executed by a processor, to cause an apparatus associated with the processor to implement any embodiments or combination of embodiments described herein.

It is noted that embodiments of the method, system, and computer program product may be configured to implement any embodiments or combination of embodiments described herein.

BRIEF DESCRIPTION OF THE DRAWINGS

The foregoing will be apparent from the following more particular description of example embodiments, as illustrated in the accompanying drawings in which like reference characters refer to the same parts throughout the different views. The drawings are not necessarily to scale, emphasis instead being placed upon illustrating embodiments.

FIG. 1 is a flowchart of a method for 3D discretization based TNM learning from historical data according to an example embodiment.
FIG. 2 is an example TNM model according to an embodiment.
FIG. 3 is an example multi-graph representation according to an embodiment.
FIG. 4 is an example multi-graph representation according to another embodiment.
FIGs. 5A-5C are examples of graph representations of 3D geometries according to an embodiment.
FIG. 6A is an example enlarged visualization of node and edge representations for the 3D geometry of FIG. 5A according to an embodiment.
FIG. 6B is an example enlarged visualization of optional element representations for the 3D geometry of FIG. 5A according to an embodiment.
FIG. 7 depicts an example FNN according to an embodiment.
FIG. 8 depicts an example graph processor for a GNN according to an embodiment.
FIG. 9 depicts an example graph U-Net architecture for a GNN according to an embodiment.
FIGs. 10A-10C illustrate example learning of local geometric features and embeddings with added neural network and operator layers according to an embodiment.
FIGs. 11A and 11B show a neural network prediction and FE analysis, respectively, of 3D deformation for the test geometry of FIG. 5B, according to an embodiment.
FIG. 12A illustrates an example automotive crushing box design according to an embodiment.
FIG. 12B illustrates an example deformed configuration of the crushing structure of FIG. 12A after axial impact according to an embodiment.
FIGs. 12C and 12D are plots showing a 3D displacement field of the crashing column of FIG. 12A after dynamic impact according to an embodiment.
FIG. 13 is an example plot of TNM reaction force history solution versus neural network prediction according to an embodiment.
FIG. 14 illustrates an example mitral valve multi-physics hemodynamics simulation model according to an embodiment.
FIGs. 15A and 15B show a neural network prediction and co-simulation result, respectively, of 3D deformation of leaflets closing states for the mitral valve model of FIG. 14, according to an embodiment.

FIG. 16 is a flowchart of a method for neural network based behavior determination of a physical object according to an example embodiment.

FIG. 17 is a schematic view of a computer network in which embodiments may be implemented.

FIG. 18 is a block diagram illustrating an example embodiment of a computer node in the computer network of FIG. 17.

DETAILED DESCRIPTION

A description of example embodiments follows.

In an embodiment, an "operator" as used herein may refer to a fixed or trainable mathematical function or neural network, a portion of a particular neural network type, or a particular design of a combination of different types of neural network. According to another embodiment, an operator may be used (i) to determine which nodes are in a neighborhood of a node, (ii) to aggregate neighborhood information to a current local node/neighborhood, (iii) to determine importance between neighbors/neighborhoods, (iv) to encode information through, *e.g.,* nonlinear transformation, (v) to decode information into physics results fields, and/or (vi) to pool local/non-local information from a node level to higher levels.

According to an embodiment, a "multi-graph" as used herein may refer to a collection of sub-graphs representing parts in an assembly that are logically connected, but that have different properties. For instance, an assembly for an antenna may include a metal component (*e.g.,* in a 'Z' shape) that is tied with a panel made from plastic. In an embodiment, types of edges in a multi-graph may include "real" edges for continuous materials, "tie" edges for parts in an assembly that move together, and "contact" edges for parts that are in contact with each other, for non-limiting examples.

Many existing approaches attempt to simulate objects, *e.g.,* determine object behavior, using ML techniques. Such approaches may employ ML surrogate models trained with results obtained from traditional physics-based solver techniques. The overwhelming interest in the industry is on using historical simulation data existing within a given enterprise collected from years of designing similar products, *e.g.,* automobiles.

However, most successes in existing approaches rely on a parametric description of a geometry to be solved and corresponding physics-based traditional solver data such as finite elements, finite volumes, etc. Although such approaches may be useful to help accelerate a parametric design process, they are limited to using geometric design data with a small number of consistent geometric parameters. Moreover, with conventional approaches, design and simulation data with inconsistent or unknown geometric design parameters cannot be used for learning and the ML models are limited in their applicability.

Some traditional approaches focus on addressing the above issue by using particular types of neural networks such as CNNs or GNNs with pre-processed/designed local/global features. One existing technique uses CNNs to extract local features, while using spectral decomposition to extract global features. Another conventional technique uses a deep graph CNN (DGCNN), but relies on human-designed local input features such as element birth flag and timing, layer height to boundary, distance to laser, etc., to learn from an additive manufacturing process simulation.

Many conventional approaches also focus on two-dimensional (2D) problems consisting of a single part with uniform material, with a few existing techniques also learning 3D problems with very limited scope. One traditional approach employs a graph convolutional network (GCN) architecture with smoothing and skip connections to learn computational fluid dynamics (CFD)-computed laminar flows around 2,000 random 2D shapes. Another traditional approach uses GNNs to learn granular flow dynamics in 2D. One current research project studies the effect of edge augmentation and graph coarsening on 2D statics problems. An existing technique adopts graph networks in a time rolling basis to learn 3D physics-based simulators; however, limitations in time integration, reconstruction of mesh and contact physics, and accumulative error make this existing technique difficult to use in general for a variety of physics problems with complex material properties and interactions.

The overwhelming interest in existing industrial practice is in 3D applications. However, most current research projects are really limited to 2D, and depend on pre-processed/design local/global features that are not generalizable for different physics phenomena or added model complexity in terms of geometric parts and assemblies.

Another existing approach to data-based physics-enabled design exploration is to utilize pre-labeled parameters in the form of CAD parameters or morphing parameters. These parameters serve as shape descriptors locally or globally and can be used as input features to neural networks for surrogate learning. However, these parametrized and morphed forms may have certain restrictions when dealing with particular boundary/loading conditions and historical datasets. In the case of an excitation location/direction/magnitude variation, the pre-labeled/engineered parameters may not include necessary information to describe a local excitation environment and neighborhood conditions. Further, in the case of new geometric changes or new conceptual designs, the pre-labeled parameters may not include necessary information to adapt to new geometric features.

Embodiments provide an advanced approach, which can learn from any desired 3D discretizations, *e.g.,* meshes, tessellations, CAD models, or other computer-based representations, and comprehensive TNM modeling features from historical data without pre-labeled geometric parameters. This approach can optionally include known CAD, morphed or encoded latent parameters locally or globally at different model levels and non-geometric parameters.

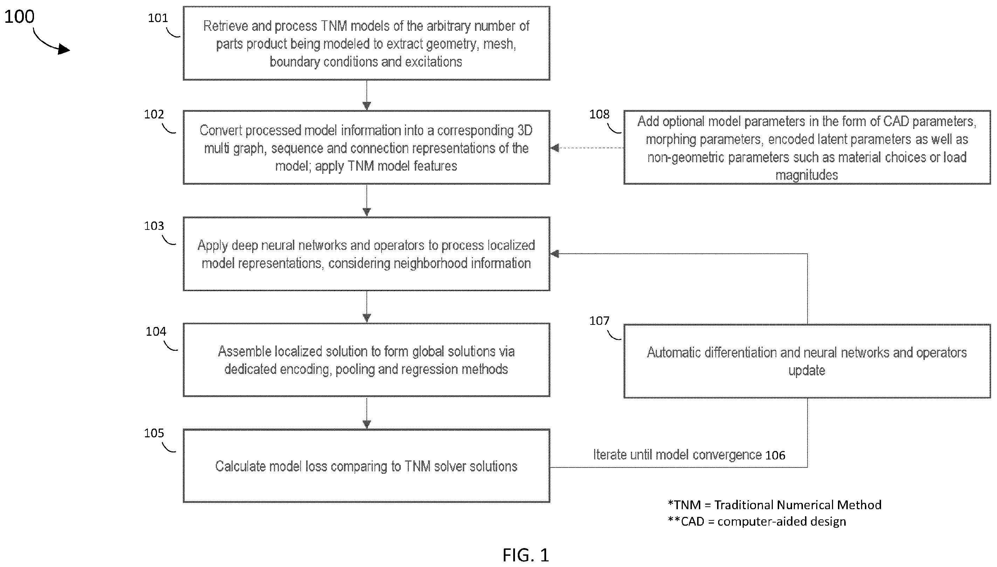

FIG. 1 is a flowchart of a method 100 for training neural network model(s) by learning from 3D discretizations and historical TNM modeling data, according to an embodiment.

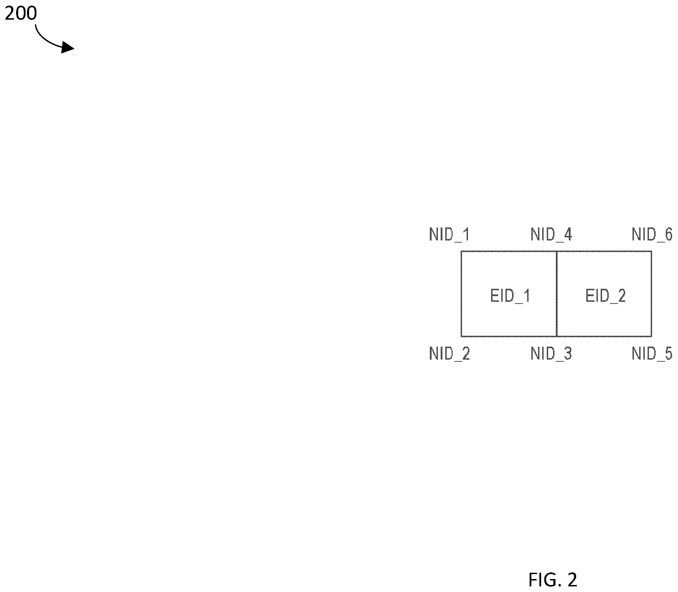

At step 101, TNM model information, *e.g.,* FE model information, for any desired number of parts and/or products as recorded in TNM models (*e.g.,* 200 (FIG. 2)) is retrieved and processed to extract geometries, meshes, boundary conditions, and/or excitations, among other examples. In an embodiment, TNM model information obtained at step 101 may include node and element definitions, node sets and element sets definitions, section properties such as material assignment, constraints and connections, boundary conditions and excitations, as well as model physics and output requests, for non-limiting examples. According to another embodiment, a TNM model may typically include model data and results data.

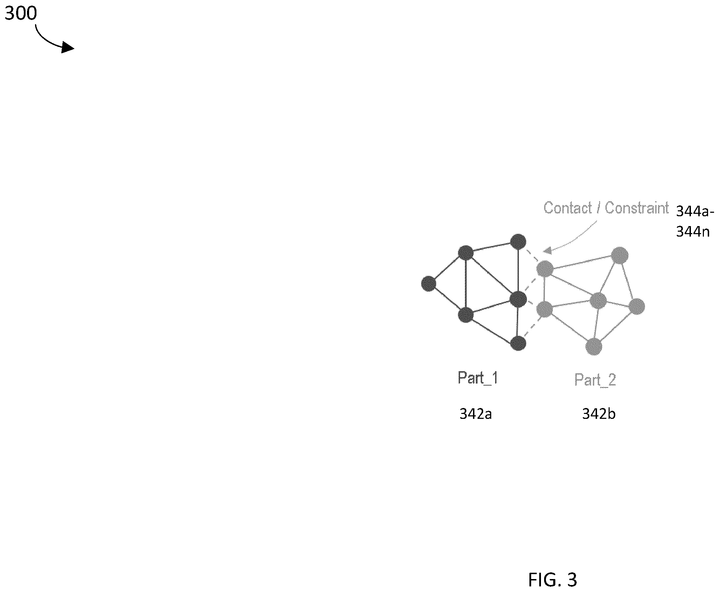

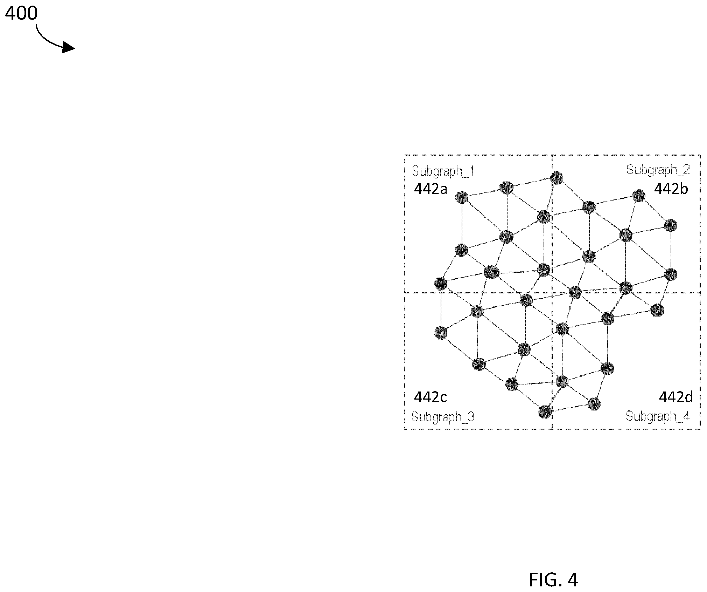

At step 102, relevant processed TNM model information, *e.g.,* FE model information, obtained at step 101 is converted to the form of corresponding 3D multi-graph model, sequence, and/or connection representations (*e.g.,* 300 (FIG. 3) or 400 (FIG. 4)). In an embodiment, a TNM model architecture obtained at step 101, *e.g.,* an FE model architecture, may be maintained as necessary to apply TNM model features. Optionally, at step 108, if model parameters are available in the form of CAD parameters, morphing parameters, encoded latent parameters, as well as non-geometric parameters such as material choices or load magnitudes, the model parameters can be added locally or at different model levels for neighborhood enhanced surrogate learning as compared to a default data-driven approach.

In an embodiment, a graph/multi-graph representation (*e.g.,* 300 (FIG. 3) or 400 (FIG. 4)) constructed at step 102 may include TNM model data and results data retrieved at step 101. According to another embodiment, a graph/multi-graph representation may represent the same 3D geometry as a TNM model, but may contain only necessary TNM model and results information converted to different data formats that are suitable for training neural network(s). in an embodiment, a graph/multi-graph representation may also include enriched or augmented neural network-specific data to fit to a design of particular neural network model(s).

At step 103, neural networks, *e.g.,* DNNs, and operators of different types, and combinations thereof, are applied to process localized model representations depending on a function and nature of the feature data and generate localized predictions or solutions. In an embodiment, neighborhood information may be considered via neighborhood aggregations. For example, a neighborhood of a graph node may be determined either by element/edge connectivity with the node or by an attention operator that assigns higher levels of relevance to particular neighbors of the node. According to another embodiment, a neighborhood may be in spatially close proximity (*e.g.,* a single edge or "hop") to the node or within a far field (*e.g.,* multiple edges or hops). In an embodiment, DNNs, and operators of different types, may encode local information into local physics solution fields, while considering neighborhood information.

At step 104, the localized predictions or solutions generated at step 103 are assembled to form global solutions via dedicated encoding, pooling (*e.g.,* graph pooling), and/or regression techniques. In an embodiment, regression models or techniques may include a process of modeling and predicting continuous or continuous-like output variables given one or more input variables. A regression technique may be linear regression, polynomial regression, gaussian process regression, or neural network regression, for non-limiting examples.

At step 105, neural network model predicted local solution fields and/or global solutions produced at step 104 is compared with a TNM solver solution from applying TNM model features to a model architecture at step 102 and error or model loss is calculated. The method 100 iterates 106 until model convergence criteria are met. The iterating 106 includes using the model loss calculated at step 105 to perform automatic differentiation and updates at step 107 for the neural network(s) and operator(s) utilized at step 103.

In an embodiment, as an illustrative example of TNM model information retrieved at step 101 of the method 100, an Abaqus® output database (".odb" file) object model may include containers and/or singular objects that describe both model and results data. A TNM model may be a single part or an assembly of connected/disconnected parts. TNM model data, *e.g.,* nodal definitions, element definitions, parts, sections, materials definitions, and results data (*e.g.,* 3D field data and history/sensor data), may be stored in containers in an Abaqus® output database object model. TNM model information used for training neural network(s) can be accessed from an Abaqus® .odb file and converted into a graph dataset.

According to another embodiment, as a further illustrative example, an Abaqus® model may contain node definitions as follows:

```
NID_1, X_1, Y_1, Z_1
   ...
NID_100, X_100, Y_100, Z_100
```

The above example node definitions may be defined in, *e.g.,* a model (.cae) file, or a text input (.inp) file , with the NID_1 etc. fields being customizable/specifiable node IDs (NIDs) and the X_1/Y_1/Z_1 etc. fields being node positions/coordinates, and may for instance be pre-processed by Abaqus® Pre and stored in a model object (.odb) file.

In an embodiment, a graph representation may use normalized node coordinates and further may not support NID customization/specification. For instance, a graph representation may instead use tensor row numbers to identify specific nodes at step 102 of the method 100 as follows (*e.g.,* as stored in a text file or a binary file):

```
normalized X_1, normalized Y_1, normalized Z_1
...
normalized X_100, normalized Y_100, normalized Z_100
```

Thus, any NID skipping, NID renumbering, and/or use of non-ascending NID order in a TNM model (*e.g.,* an Abaqus® .odb file) may potentially be renumbered in graph representations at step 102 of the method 100.

FIG. 2 is an example TNM model 200, *e.g.,* an Abaqus® model, according to an embodiment. As shown in FIG. 2, the TNM model 200 may include element definitions for EID_1 with nodes NID_1, NID_2, NID_3, NID_4 and EID_2 with nodes NID_4, NID_3, NID_5, NID_6, where EID_1 and EID_2 are customizable/specifiable element IDs (EIDs) and NID_1, NID_2, NID_3, NID_4, NID_5, NID_6 are customizable/specifiable NIDs.

In an embodiment, as yet another illustrative example of TNM model information retrieved at step 101 of the method 100, a model object (.odb) file may be used to store the element definitions shown in FIG. 2 in the below format:

```
EID_1, NID_1, NID_2, NID_3, NID_4
EID_2, NID_4, NID_3, NID_5, NID_6
...
```

According to an embodiment, a graph representation may use directed/undirected edge definitions and further may not support EID customization/specification. For instance, a graph representation may instead represent the same elements shown in FIG. 2 with an undirected graph edge tensor at step 102 of the method 100 as follows (*e.g.,* stored as rows/columns in a text file or a binary file):

```
NID_1, NID_2, NID_2, NID_3, NID_3, NID_4, NID_4, NID_1, NID_3, NID_5,
NID_5, NID_6, NID_6, NID_4
NID_2, NID_1, NID_3, NID_2, NID_4, NID_3, NID_1, NID_4, NID_5, NID_3,
NID_6, NID_5, NID_4, NID_6
 ...
```

In an embodiment, the two example element definitions EID_1 and EID_2 in FIG. 2 may be processed and converted into the 14-column edge definitions shown above for constructing an undirected graph at step 102 of the method 100. Each column in the above edge tensor may represent a starting or ending node of one directed edge. For example, in the first row, the edges may be (NID_1, NID_2), (NID_2, NID_3), (NID_3, NID_4), (NID_4, NID_1), (NID_3, NID_5), (NID_5, NID_6), and (NID_6, NID_4). According to another embodiment, because NIDs may not be customizable, as discussed hereinabove, NIDs may be renumbered at step 102 of the method 100 so that they match the row numbers of a node feature tensor.

According to an embodiment, a node feature tensor constructed at step 102 of the method 100 may include normalized nodal coordinates and any other relevant model information at the node level. For instance, a node feature tensor constructed at step 102 of the method 100 may include boundary conditions and loading conditions, and material properties in the below format (*e.g.,* as stored in a text file or a binary file):

```
normalized X_1, normalized Y_1, normalized Z_1, boundary_1, load_1, thickness_1
...
normalized X_100, normalized Y_100, normalized Z_100, boundary_100, load_100,
thickness_100
```

In an embodiment, TNM results information retrieved at step 101 of the method 100 may be stored (*e.g.,* in a text file or binary file) in a separate tensor in a graph representation in the below example format:

```
displacement X_1, displacement Y_1, displacement Z_1
...
displacement X_100, displacement Y_100, displacement Z_100
```

FIG. 3 is an example multi-graph representation 300 according to an embodiment. As shown in FIG. 3, the multi-graph representation 300 includes an assembly of two parts 342a and 342b in contact/constraint. In an embodiment, edge type(s) of contact(s)/constraint(s) 344a-344n may be established between the parts 342a and 342b based on contact/constraint definitions (not shown).

According to an embodiment, a multi-graph (*e.g.,* 300) may be constructed at step 102 of the method 100 to represent constrained/connected/disconnected parts (*e.g.,* 342a and 342b). For instance, one sub-graph (*e.g.,* 342a) may represent Part 1, and another sub-graph (*e.g.,* 342b) may represent Part 2. In another embodiment, node and/or edge properties may be different between parts (*e.g.,* 342a and 342b). According to an embodiment, static edge connectivity and/or properties may be defined based on constraint definitions. In another embodiment, dynamic edge connectivity and/or properties may be assigned and/or updated based on contact detection and/or contact stiffness calculations.

FIG. 4 is an example multi-graph representation 400 according to another embodiment. As shown in FIG. 4, the multi-graph representation 400 may be divided into four sub-graphs 442a-442d. In an embodiment, the sub-graphs 442a-442d may be used for attention training to find more influential neighborhoods/sub-graphs. According to another embodiment, the sub-graphs 442a-442d may also or alternatively be used for training in parallel, *e.g.,* on four respective graphics processing unit (GPU) cores.

In an embodiment, computer program(s) may be written to automate the process of reading TNM model and results data (*e.g.,* 200 (FIG. 2)) at step 101 of the method 100 and processing necessary data and converting the data at step 102 of the method 100 to form graph/multi-graph datasets (*e.g.,* 300 (FIG. 3) or 400 (FIG. 4)) ready for storage and/or neural network training.

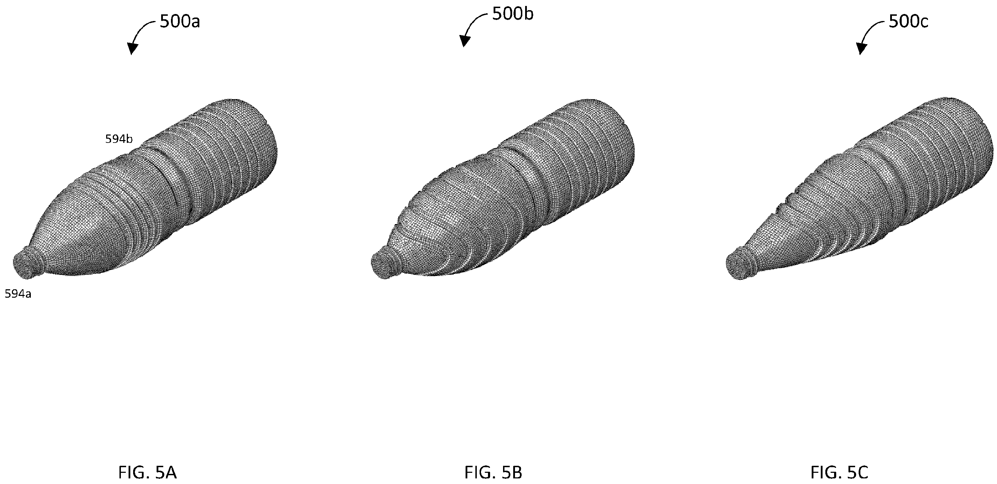

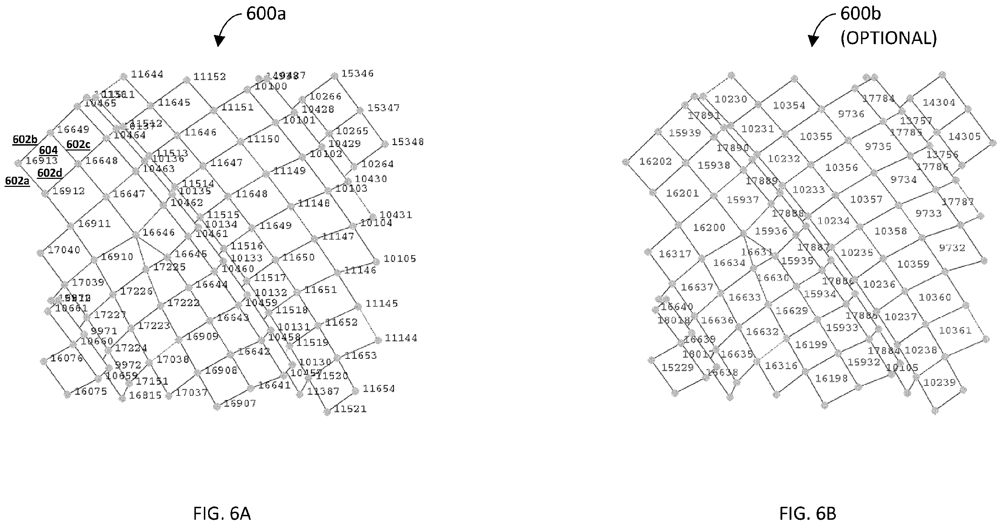

FIGs. 5A-5C, 6A, and 6B, described hereinbelow, show example 3D geometries and their graph representations according to an embodiment.

FIGs. 5A-5C show example graph representations of 3D bottle geometries 500a-500c, respectively, according to embodiments. FIGs. 5A-5C depict spatial visualizations of node positions, element and edge connectivities of the example 3D geometries 500a-500c for illustration purposes, but do not show all other feature representations, *e.g.,* preloads, boundary and loading conditions, material properties (such as thickness), contact conditions, and local and/or global physics information, etc. In an embodiment, a geometry 500a-500c may be a 3D representation of a TNM model, *e.g.,* 200 (FIG. 2). According to another embodiment, a model may for example include multiple elements, *e.g.,* cap 594a and body 594b of the bottle geometry 500a, each having different materials. A further example of this is a car that is constructed with different materials such as metal and plastic, etc., joined together with spot welds, adhesives, bolts, and/or rivets, etc. constraints. In an embodiment, element sets or sections may be used to represent different materials in an assembly of parts.

FIG. 6A is an example enlarged visualization of a small portion of node and edge representations 600a for the 3D geometry 500a of FIG. 5A, according to an embodiment. In an embodiment, as shown in FIG. 6A, a 3D graph representation of geometry may include node and edge representations, *e.g.,* 600a. According to another embodiment, nodes, *e.g.,* 16912, 16913, 16648, and 16649, may represent a set of 3D point clouds on a surface of an example geometry, *e.g.,* 600a. In an embodiment, edges, *e.g.,* 602a-602d, may connect nodes or cloud points, thereby forming elements for each smallest patch, *e.g.,* 604.

FIG. 6B is an example enlarged visualization of a small portion of optional element representations for the 3D geometry 500a of FIG. 5A according to an embodiment. In an embodiment, as shown in FIG. 6B, a 3D graph representation of geometry may optionally include element representations, *e.g.,* 600b. According to another embodiment, an element may be three-noded, *e.g.,* 16631, or four-noded, *e.g.,* 16202, for 3D surface representations. In an embodiment, for other applications, examples can include four-noded or eight-noded elements for 3D solid representations (not shown).

According to an embodiment, graph representations, *e.g.,* 500a-500c, may be unstructured, meaning that any desired topologies can be encompassed with an appropriate number of nodes and/or elements.

In an embodiment, nodes may be associated, *e.g.,* in data structure(s) and memory, with node attributes and/or properties, such as local nodal coordinates, boundary conditions, and/or loading conditions, for non-limiting examples. According to another embodiment, edges may also be associated, *e.g.,* in data structure(s) and memory, with edge attributes and/or properties, such as local edge type and/or edge length, for non-limiting examples. Optionally, in an embodiment, elements and/or numerical integration points may also be associated, *e.g.,* in data structure(s) and memory, with integration point attributes and/or properties such as local material properties and/or material orientations, for non-limiting examples. Optionally, according to another embodiment, node and edge attributes and/or properties may include shape descriptors in the form of CAD parameters, morphed parameters, and/or encoded local/global latent parameters when available, for non-limiting examples.

According to an embodiment, graph/multi-graph representations, *e.g.,* 500a-500c, may be created with connections modeled via edges of different types, *e.g.,* ties and spot-welds, associated with particular properties, *e.g.,* spring stiffness, or contacts associated with contact pressure.

In an embodiment, model representations may be connected or disconnected. For instance, a connected model may represent connected parts and assemblies. A disconnected model may represent, *e.g.,* isolated parts and structures.

According to an embodiment, time sequence representations may be created with time dependent attributes. For example, time dependent nodal deformations for dynamics problems may be represented as sequence data and associated, *e.g.,* in data structure(s) and memory, with particular nodes. Any desired loading histories may also be represented as sequence data.

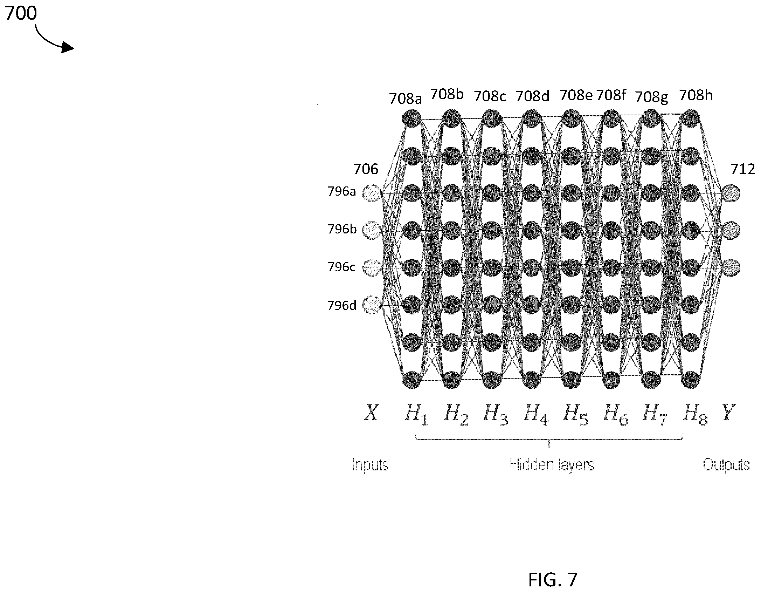

FIG. 7 illustrates an example FNN 700 according to an embodiment. As shown in FIG. 7, the FNN 700 may include input layer 706, one or more hidden layer(s) 708a-708h, and output layer 712.

In an embodiment, a graph/multi-graph representation stored or serialized in a text file (such as a binary file or other suitable known file format) may be used as input to the FNN 700. For instance, the binary file may contain one or more matrices (*e.g.,* PyTorch® tensors) including a matrix of node x/y/z coordinates and nodal features, *e.g.,* material properties, boundaries, etc. The x, y, and z coordinates of each node in the text file may be processed at inputs 796a, 796b, and 796c, respectively, of the layer 706, while the nodal features may be processed at input 796d. According to another embodiment, the binary file may also contain a matrix for edge properties such as length and x/y/z projection. The edge properties may for instance be processed by a second neural network (not shown) and results of the processing may be merged with the output 712 of the FNN 700.

According to an embodiment, an equation for an output of hidden layer $H_{(i)}$, *e.g.,* 708a-708h, in an FNN may have the following example form:

$$H_{(i+1)} = \sigma(W_i^T \cdot H_{(i)} + b_i)$$

- $\sigma$ is an activation function
- $W^T$ is a transposed weight matrix
- b is a bias matrix

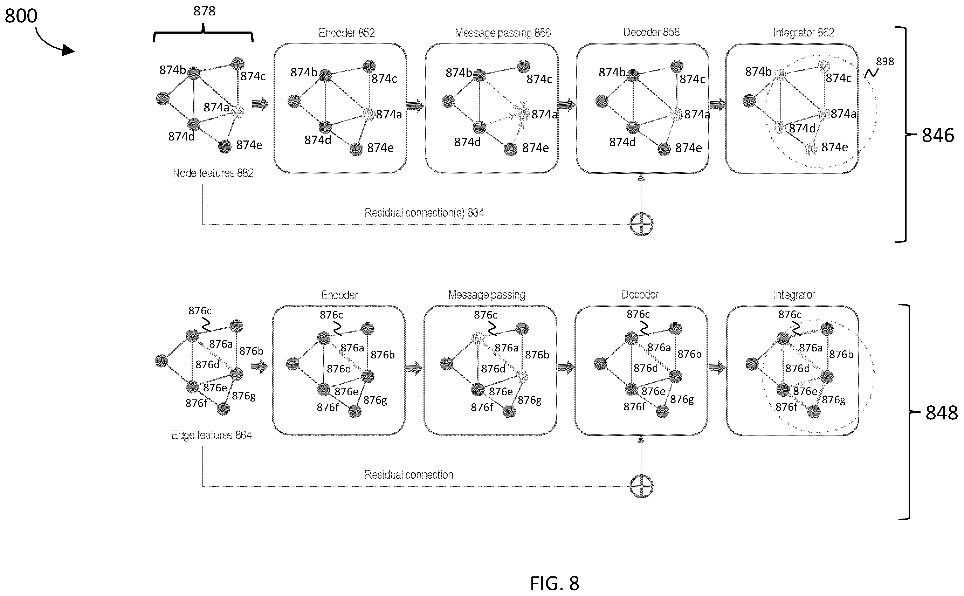

FIG. 8 depicts an example graph processor 800 for a GNN according to an embodiment.

FIG. 8 shows an example of processing a graph representation 878. In FIG. 8, the top figure shows an example node feature processor 846 and the bottom figure shows an example edge feature processor 848. Circles/dots in FIG. 8, *e.g.,* 874a-874e, represent nodes. Lines in FIG. 8, *e.g.,* 876a-876g, represent edges. In an embodiment, the starting graph 878 may be a result of converting TNM model data, *e.g.,* node, element and properties, at step 102 of the method 100. To continue, an encoder block 852 of the node feature processor 846 may encode physical features 882, *e.g.,* nodal coordinates, nodal curvatures, thickness, stiffness, boundary and loading conditions, into a transformed space (not shown) of a desired number of dimensions at the node level. For instance, the block 852 may encode the preceding original features into a latent feature space with a much higher number of dimensions. At the block 852, a node, *e.g.,* circle/dot 874a, may have no information from any other nodes in the graph 878.

Continuing with FIG. 8, in subsequent message passing block 856, each node, *e.g.,* 874a, may receive and aggregate information from neighboring nodes, *e.g.,* 874b-874e, such as by averaging values of the neighboring nodes 874b-874e and summing the averaged values with values of the node 874a. According to an embodiment, the neighboring nodes 874b-874e may initially be selected via pre-defined edge connections. In another embodiment, the neighboring nodes 874b-874e may be updated based on pre-defined criteria such as most influential features, *e.g.,* top-k pooling, or based on trained attention score, *e.g.,* via a graph attention layer. According to an embodiment, with added numbers of graph processing layers, the neighboring nodes 874b-874e may expand to nodes further away (not shown) with either more iterations of edge hopping or updated edge connectivity via pre-defined criteria. After completion of the block 856, a node, *e.g.,* circle/dot 874a, may have gathered information from neighbor nodes, *e.g.,* 874b-874e, in the graph 878.

Continuing again with FIG. 8, following the message passing block 856, a decoder block 858 may nonlinearly transform nodal information aggregated by the block 856 at, *e.g.,* node 874a, into local physics field(s) (not shown). In an embodiment, residual connection(s) 884 may be added to enable passing of original physics representations, *e.g.,* local information such as thickness, time-dependent values, etc., to the decoder block 858 for more efficient training. Following the block 858, an integrator block 862 may integrate local information, *e.g.,* from nodes 874a-874e, for a sub-domain partitioned by circle 898 defined by a radius (not shown) from node 874a to form condensed, sub-domain and high level graph representations (not shown). Other types of sub-domain divisions are also suitable.

Continuing again with FIG. 8, in an embodiment, the edge feature processor 848 may follow similar procedures as a node processor (*e.g.,* 846), except that edge features 864 may be processed and/or updated instead of node features (*e.g.,* 882). According to another embodiment, the edge processing 848 may optionally include previously updated node features.

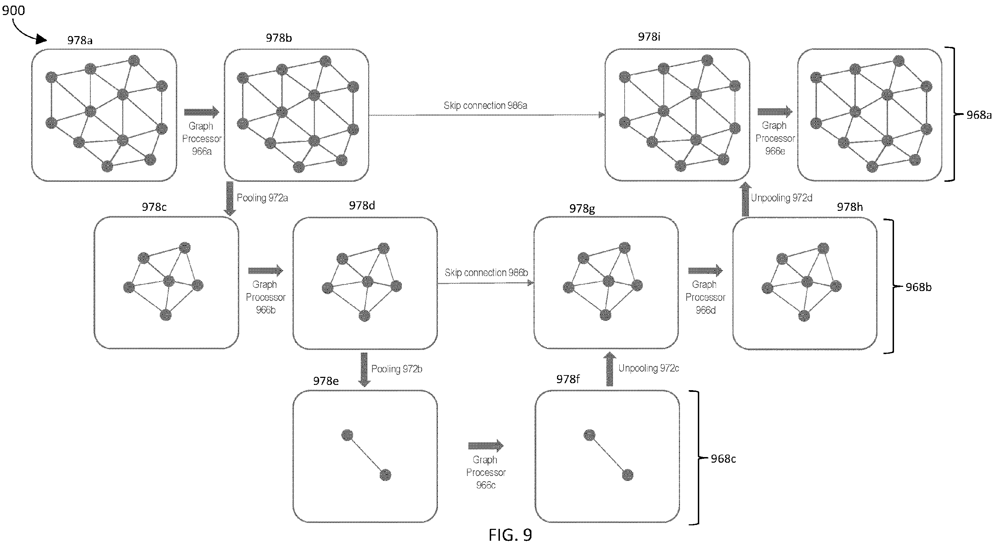

FIG. 9 depicts an example graph U-Net architecture 900 for a GNN according to an embodiment. In an embodiment, the architecture 900 may be used to process features, *e.g.,* node features 882 (FIG. 8), edge features 864 (FIG. 8), integrated features, etc., from local to global levels.

According to an embodiment, arrows labeled 966a-966e in FIG. 9 may each represent a graph processor, *e.g.,* 800 (FIG. 8). In another embodiment, at level 968a, starting from an original graph 978a, which may be, *e.g.,* converted from TNM model data at step 102 of the method 100, the graph processor 966a may be trained to output hidden graph representation(s) 978b (*e.g.,* node feature(s), edge feature(s), integrated feature(s), etc.). According to an embodiment, an operator 972a may be added to the hidden graph representation(s) 978b to condense them into higher level graph representation(s) 978c at level 968b. In another embodiment, the operator 972a may be a pre-defined (*e.g.,* to obtain a mean or averaging) or trainable pooling operator or a pre-defined or trainable local integration operator. According to an embodiment, the foregoing condensing process may continue with operator 972b to extract graph representation(s) 978e at higher levels, *e.g.,* 968c. In another embodiment, unpooling or interpolation, *e.g.,* 972c or 972d, can be added to condensed graphs, *e.g.,* 978f or 978h, to reconstruct graph representations, *e.g.,* 978g or 978i, at fundamental levels, *e.g.,* 968b or 968a. According to an embodiment, skip connections, *e.g.,* 986a or 986b, may be added to pass information at the same level, *e.g.,* 968a or 968b. In another embodiment, attention layers (not shown) may be included in a graph processor 966a-966e for neighbor aggregation from local graph regions (not shown) that exhibit greater influence on physics fields (not shown).

In an embodiment, neural network(s) and/or operator(s) may be applied, *e.g.,* at step 103 of the method 100, on local patch(es) of a mesh representation and may learn about localized geometric feature(s) and/or embedding(s). For example, FNN(s), *e.g.,* 700, may be applied for localized input feature embeddings. GNN(s), *e.g.,* 800 or 900, may be applied to learn embeddings about localized geometric characteristics and neighborhood loading and boundary conditions. A GNN may employ graph pooling, *e.g.,* 972a or 972b, such as at step 104 of the method 100, to aggregate localized solution fields and merge to higher level or global embeddings. RNN(s) and/or TNN(s) may be applied to learn embeddings about sequence data.

According to an embodiment, an equation for a straightforward graph pooling operation, *e.g.,* 972a or 972b, that may be applied, *e.g.,* by a GNN at step 104 of the method 100, may have the following example form:

$$z_G = \frac{\sum_{v \in V} z_u}{f_n |V|}$$

- $z_u$ are node embeddings
- $f_n$ is any desired normalizing function
- $V$ is a set of nodes in graph $G$

According to an embodiment, a single-step graph message passing technique for a GNN, *e.g.,* the message passing block 856 of the GNN 800, may utilize the following example equation:

$$h_u^{(k+1)} = \sigma(W_{self}^{(k)} h_u^{(k-1)} + W_{neigh}^{(k)} \sum_{v \in N(u)} (h_v^{(k-1)} + b^{(k)}))$$

- $k$ is a message passing iteration number
- $h_u^{(k+1)}$ is an embedding of node $u$ at iteration $k+1$
- $N(u)$ is a set of nodes v in node $u$'s graph neighborhood

In an embodiment, an attention operator may be applied for neighborhood selection and message passing/aggregation.

According to another embodiment, a two-step graph message passing technique may utilize the following example equations:

$$\text{AGGREGATE}: m_{N(u)}^{(k)} = \sum_{v \in N(u)} h_v^{(k-1)} + b^{(k)}$$

$$\text{UPDATE}: h_u^{(k+1)} = \sigma(W_{self}^{(k)} h_u^{(k-1)} + W_{neigh}^{(k)} m_{N(u)}^{(k)})$$

- k is a message passing iteration number
- UPDATE and AGGREGATE are any desired differentiable functions
- $m_{N(u)}^{(k)}$ is a message that is aggregated from node $u$'s graph neighborhood $N(u)$
- UPDATE combines message $m_{N(u)}^{(k)}$ with previous iteration embedding $h_u^{(k-1)}$

In an embodiment, attention operator and/or other operators may be applied for neighborhood selection and message passing/aggregation.

According to an embodiment, a Gated Recurrent Unit type of RNN may include the following example equations:

$$z_t = \sigma(W_z \cdot [h_{t-1}, x_t])$$

$$r_t = \sigma(W_r \cdot [h_{t-1}, x_t])$$

$$\widetilde{h_t} = tanh(W \cdot [r_t * h_{t-1}, x_t])$$

$$h_t = (1 - z_t) * h_{t-1} + z_t * \widetilde{h_t}$$

- $x_t$ is an input
- $z_t$ is an update gate
- $r_t$ is a reset gate
- $\tilde{h}_t$ is a candidate activation
- $h_t$ is a new hidden state

In another embodiment, a Long Short-Term Memory (LSTM) type of RNN or a TNN may be applied.

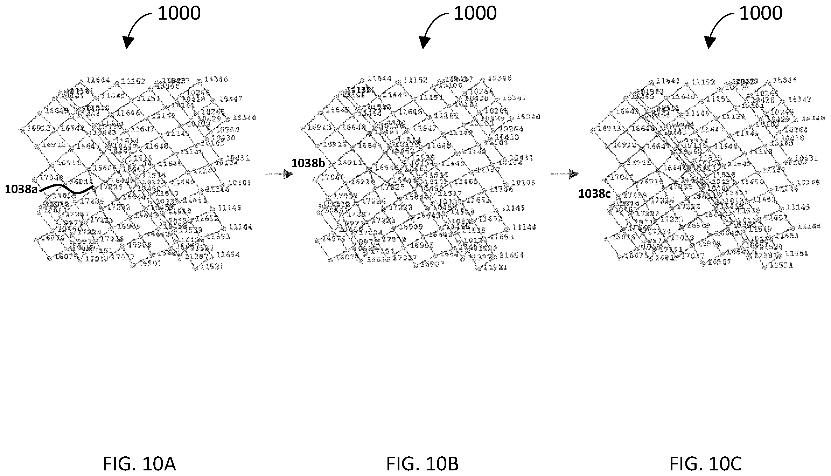

FIGs. 10A-10C illustrate example learning of local geometric features and embeddings for localized graph representation 1000 with added neural network and operator layers according to an embodiment. As shown in FIGs. 10A-10C, in an embodiment, local geometric feature(s) and/or embedding(s) may be learned, *e.g.,* at step 103 of the method 100, by considering neighborhood information for graph neighborhoods 1038a-1038c and messages aggregated (*e.g.,* via the example graph message passing techniques described hereinabove) from the graph neighborhoods 1038a-1038c with added neural network layers.

FIGs. 10A-10C illustrate an example of neighborhood aggregation that may be performed at, *e.g.,* step 103 of the method 100, according to an embodiment. In FIG. 10A, neighborhood information for the graph neighborhood 1038a may be considered. Then, in FIG. 10B, neighborhood information for the graph neighborhood 1038b, which includes additional nodes adjacent to the neighborhood 1038a, may be considered. In turn, in FIG. 10C, neighborhood information for the graph neighborhood 1038c, which includes additional nodes adjacent to the neighborhood 1038b, may be considered.

According to another embodiment, FIGs. 10A-10C may depict a multi-scale graph and/or a coarser mesh overlaid on a fine mesh. In yet another embodiment, FIGs. 10A-10C may illustrate use of an attention operator to select a particular neighborhood, *e.g.,* 1038a-1038c, for instance as part of a graph attention layer.

In an embodiment, localized embeddings may be used to construct encoded localized solution functions, *e.g.,* at step 103 of the method 100, which in turn may eventually be assembled to form global solutions, *e.g.,* at step 104 of the method 100. According to another embodiment, neural network architectures may be defined to fit learning of different physics features and equations by utilizing a multi-scale multi-physics TNM architecture with controlling physics conditions. For example, displacements may be local node quantities, forces may be integrated quantities over a particular patch/surface, *e.g.,* 1000, loadings may be distributed over a patch/surface of nodes, *e.g.,* 1000, or may be dependent on contacts and constraints. In an embodiment, neural networks may learn about 3D geometries and their corresponding FE model features and physics conditions and a corresponding FE solution. Given a new FE input model file, an example embodiment may identify local and global characteristics and make predictions.

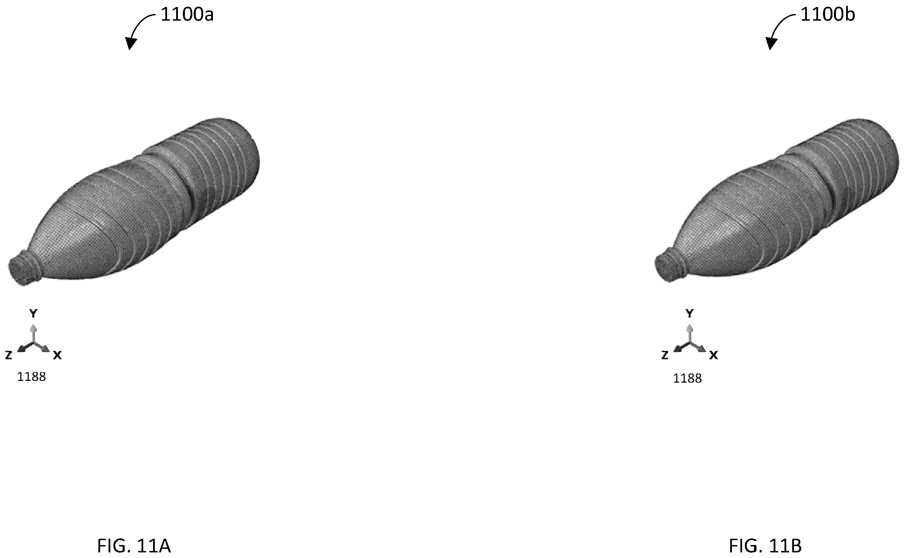

FIGs. 11A and 11B illustrate neural network prediction results 1100a and FE analysis results 1100b, respectively, of 3D deformation for the test bottle geometry 500b of FIG. 5B, according to an embodiment. FIGs. 11A and 11B show an example comparison between an example embodiment's neural network predicted X-displacement field 1100a (indicated by shading) and the actual FE analysis results 1100b (indicated by shading) at the end of a buckling analysis for the test geometry 500b. In FIGs. 11A and 11B, indicator 1188 shows an x-direction, y-direction, and z-direction.

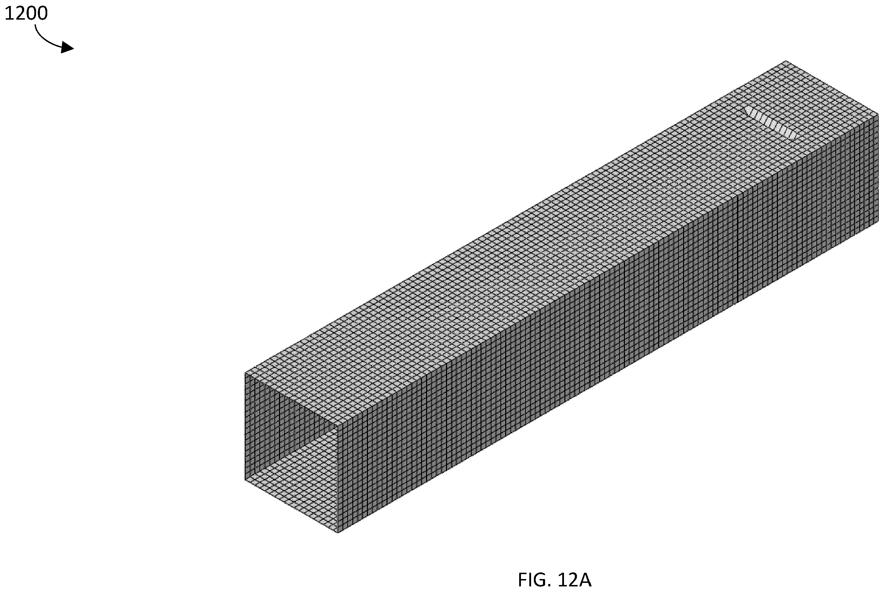

FIG. 12A shows an example automotive crushing member 1200 designed to deform and absorb impact energy, according to an embodiment.

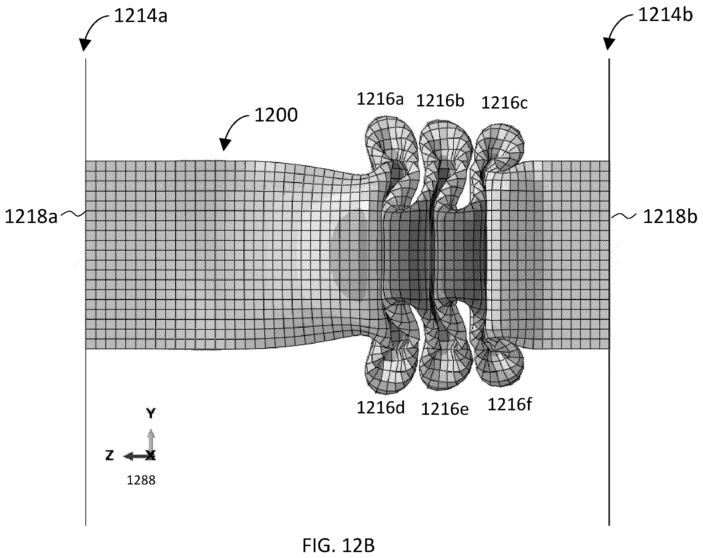

FIG. 12B illustrates an example deformed configuration of the crushing structure 1200 after axial impact, according to an embodiment. Shading in FIG. 12B indicates X-direction magnitude of a distortion or deformation component.

FIG. 12B shows the deformed state of the example crushing structure 1200 when impacted by a rigid wall 1214a from the left while contacting a fixed rigid wall 1214b on the right. In an embodiment, contact interactions may be modeled between the rigid walls 1214a and 1214b and the example crushing structure 1200 as well as between folding parts 1216a-1216f of the crushing structure 1200 itself. According to another embodiment, to evaluate crushing resistance of the structural design 1200, contact pressures may be collected between the rigid wall 1214a or 1214b and an edge 1218a or 1218b, respectively, of the crushing structure 1200. In FIG. 12B, indicator 1288 shows an x-direction, y-direction, and z-direction.

In an embodiment, to enable historical data-based learning, the example physics problem of FIG. 12B may be modeled as three isolated graphs, with edges of material types and features such as thickness for nodal connections within the crushing structure 1200 and edges of contact features between the rigid wall 1214a or 1214b and the edge 1218a or 1218b, respectively, of the crushing structure 1200. According to another embodiment, boundary conditions and loading conditions may be labeled as node features.

According to an embodiment, to calculate the crushing force/resistance, pooling may be performed to collect crushing forces from the nodes on the edge 1218a or 1218b of the crushing structure 1200 where contact happens.

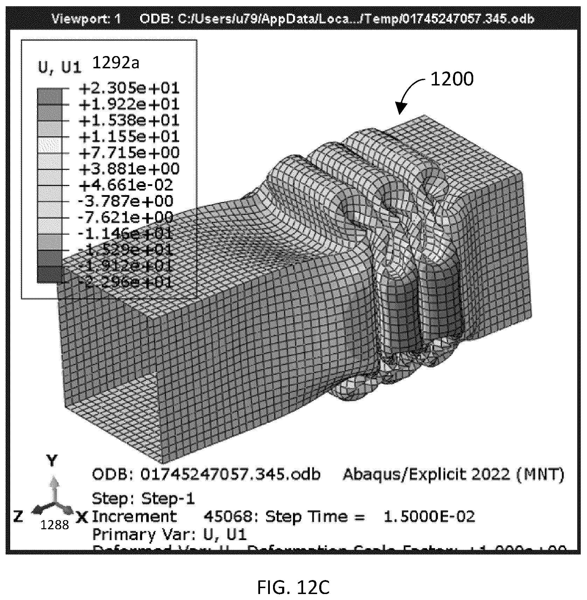

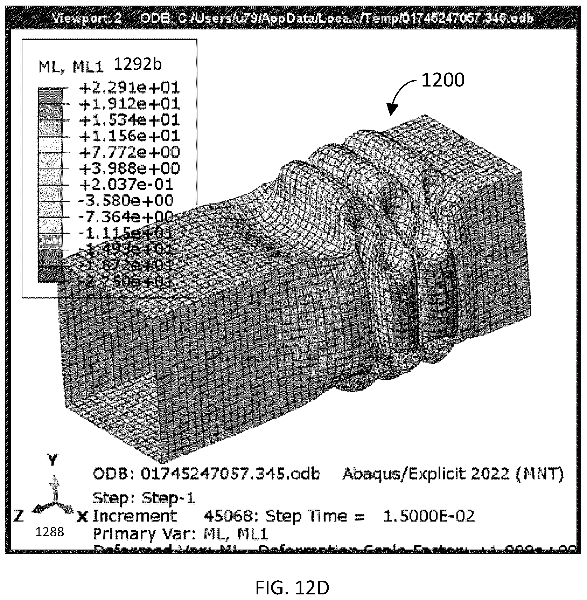

FIGs. 12C and 12D are plots showing a 3D displacement field of the crashing column 1200 of FIG. 12A after dynamic impact according to an embodiment.

FIG. 12C shows a FE analysis solution for 3D deformation and a contour plot of X-displacement (U, U1) 1292a according to an embodiment.

FIG. 12D shows a neural network solution for 3D deformation and a contour plot of X-displacement (ML, ML1) 1292b according to an embodiment.

In an embodiment, after neural network(s) training is performed and the trained neural network(s) are used during inference, the neural network model(s) may predict node level (*e.g.,* nodal displacement, stress and strain), local level (*e.g.,* contact reaction force), and/or graph level (e.g., energy absorption) features. The predicted data may be processed for 3D visualization in a TNM solver/viewer, *e.g.,* Abaqus/CAE.

For example, according to an embodiment, an Abaqus® output database (.odb file) object model may include containers and/or singular objects that describe both model and results data and can be edited to add external results fields and/or history/sensor data. In another embodiment, computer programs may be written to automate this editing process, and predict and write results to a TNM object model. A TNM solver/viewer, *e.g.,* Abaqus/CAE, may then be used to visualize the neural network predictions, such as in FIG. 12D.

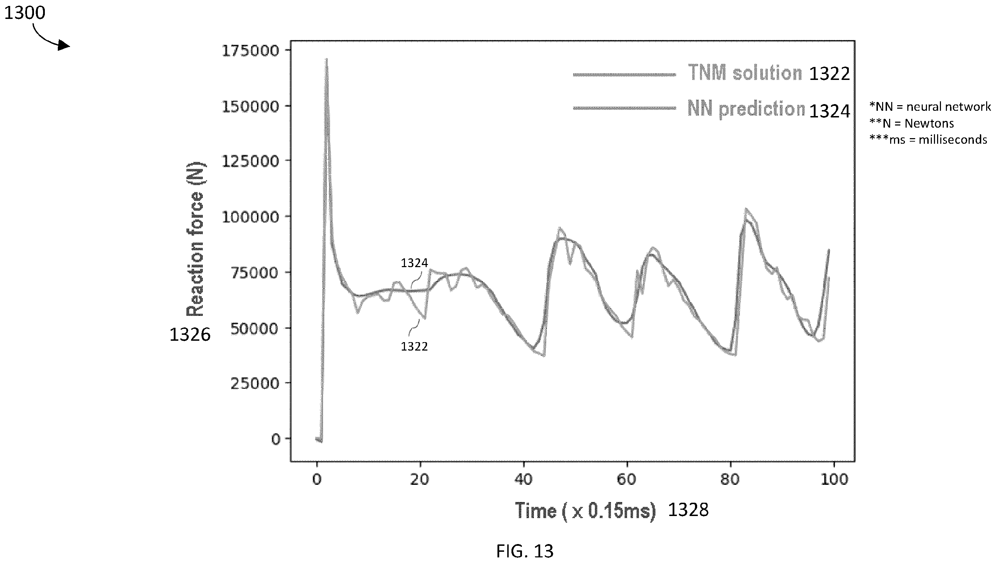

FIG. 13 is an example plot 1300 of a TNM reaction force history solution 1322 versus a neural network predicted solution 1324 according to an embodiment. As shown in FIG. 13, in an embodiment, the TNM crushing force history 1322 in Newtons (N) of reaction force 1326 with respect to time 1328 is compared to the neural network predicted crushing force history 1324 for a newly designed crushing structure, *e.g.,* 1200 (FIG. 12A). FIG. 13 reflects a good correlation between the TNM reference result 1322 and the neural network prediction 1324 of an example embodiment.

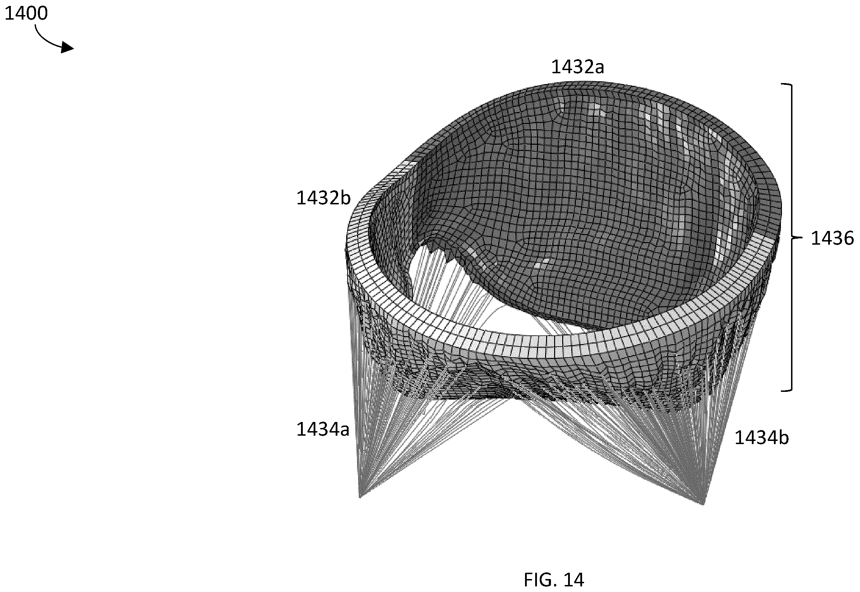

FIG. 14 illustrates an example mitral valve multi-physics hemodynamics simulation model 1400 according to an embodiment.

As another example to illustrate TNM modeling features that may be utilized by embodiments, *e.g.,* at step 102 of the method 100, the example mitral valve multi-physics model 1400 may be learned via multi-graphs to represent anterior 1432a and posterior 1432b leaflets with visco-hyperelastic properties and shared nodes, *e.g.,* node sharing between 1432a and 1432b. In an embodiment, mitral chordae 1434a and 1434b may be modeled with edges of connector type with hyperelastic properties. According to another embodiment, tie connections/edges may be defined to connect mitral valve 1436 and the chordae 1434a and 1434b. In an embodiment, pressure history from a circulation model may be used as a driving boundary condition to the mitral valve model 1400. According to another embodiment, non-geometric parameters such as material properties parameters, papillary muscle location parameters, chordae length parameters, and other influential parameters may be added to the graph as node and/or edge features. In FIG. 14, shading may indicate the different components 1432a, 1432b, 1434a, and 1434b of the model 1400.

Optionally, in an embodiment, a multi-graph dataset may be divided into sub-graphs and/or sub-domains for parallel training with or without inter sub-graph/sub-domain attention and/or to fit into processor, *e.g.,* GPU, memory. According to an embodiment, local features, *e.g.,* nodes and/or edges, on a domain boundary may be updated and used for neighbor aggregation for surrounding domains training for message passing between domains.

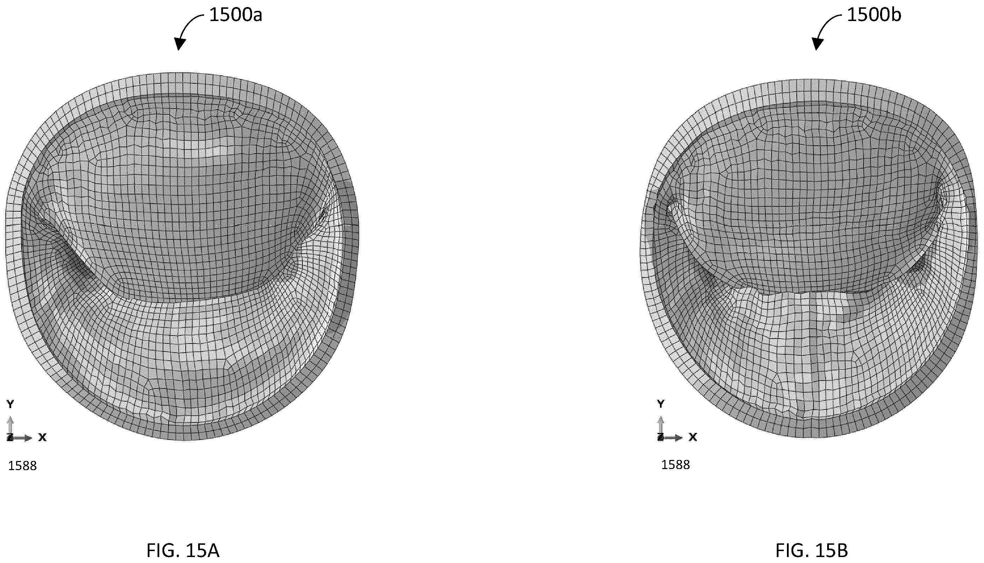

FIGs. 15A and 15B show a neural network prediction 1500a according to an embodiment and a co-simulation result 1500b, respectively, of 3D deformation of leaflet 1432a and 1432b (FIG. 14) closing states for the mitral valve model 1400 of FIG. 14. Shading in FIGs. 15A and 15B indicates X-direction magnitude of a distortion or deformation component. In FIGs. 15A and 15B, indicator 1588 shows an x-direction, y-direction, and z-direction.

FIGs. 15A and 15B show an example comparison between an example embodiment's neural networks predicted leaflet closing states 1500a and the example results 1500b from an actual co-simulation using, *e.g.,* Dymola®/Abaqus®, for a test geometry. In an embodiment, non-geometric parameters including material properties, papillary muscle location, chordae length, and other influential parameters may be added in the multi-graphs as additional node and/or edge features.

## Example Method Embodiment

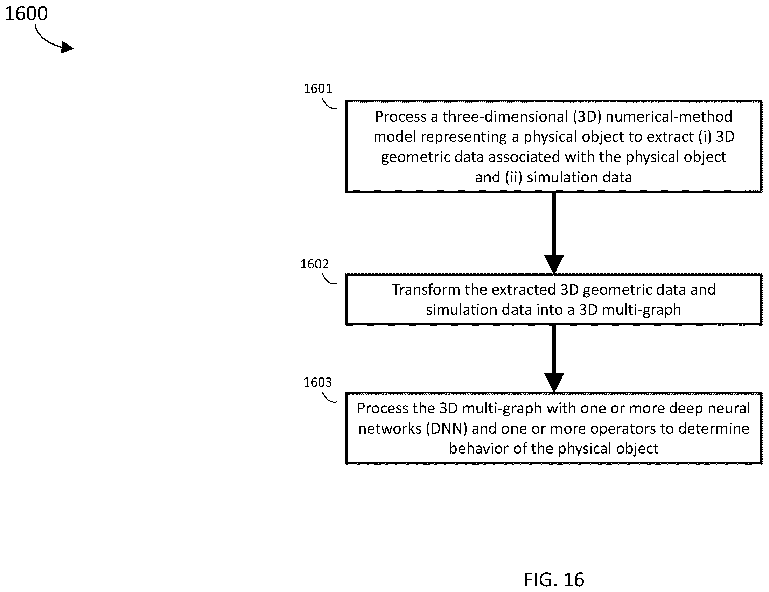

FIG. 16 is a flowchart of a method 1600 for neural network based behavior determination of a physical object according to an embodiment. The method 1600 is computer-implemented and may be implemented using any computing device, *e.g.,* a processor, or combination of computing devices known to those of skill in the art.

The method 1600 begins at step 1601 by processing a 3D numerical-method model, *e.g.,* 200 (FIG. 2), representing a physical object to extract (i) 3D geometric data, *e.g.,* 500a (FIG. 5A), 500b (FIG. 5B), or 500c (FIG. 5C), associated with the physical object and (ii) simulation data. Next, at step 1602, the method 1600 transforms the extracted 3D geometric data and simulation data into a 3D multi-graph, *e.g.,* 300 (FIG. 3), 400 (FIG. 4), 878 (FIG. 8), or 978a (FIG. 9). At step 1603, the 3D multi-graph is then processed with one or more DNN, *e.g.,* FNN 700 (FIG. 7), GNN 800 (FIG. 8), or GNN 900 (FIG. 9), and one or more operators, *e.g.,* 972a-972d (FIG. 9), to determine behavior of the physical object.

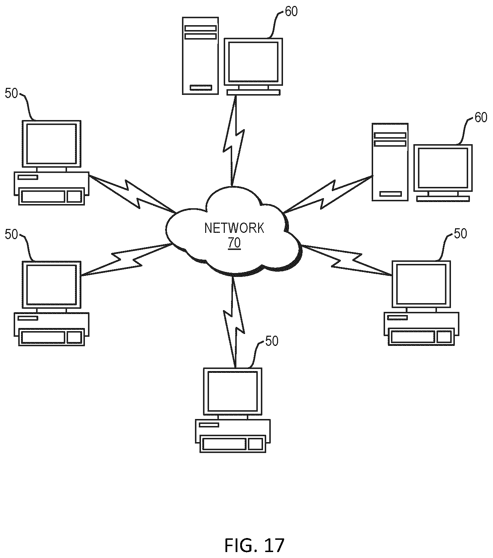

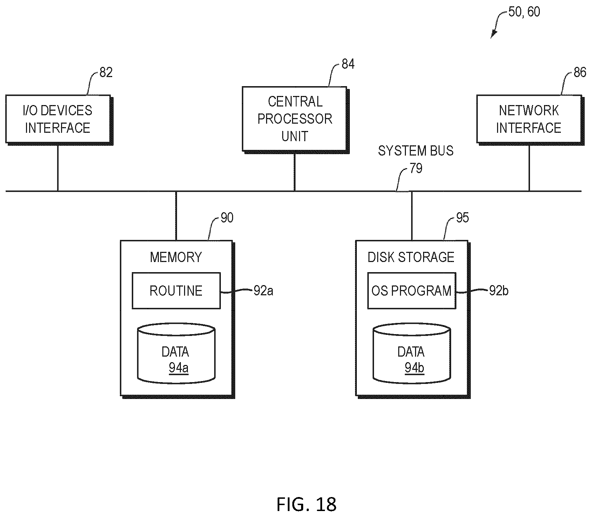

As noted, the method 1600 is computer-implemented and, as such, the functionality and effective operations, *e.g.,* the processing (1601, 1603) and transforming (1602), are automatically implemented by one or more digital processors. The method 1600 can also be implemented using any computer device or combination of computing devices known in the art. Among other examples, the method 1600 can be implemented using computer(s)/device(s) 50 and/or 60 described hereinbelow in relation to FIGs. 17 and 18.

In an example embodiment of the method 1600, the 3D numerical-method model may represent an assembly composed of multiple parts, connections between the multiple parts, and interactions between the multiple parts. According to one such embodiment, the assembly may be a vehicle, an aircraft, an antenna, a mitral valve, *e.g.,* 1436 (FIG. 14), a structural system, a fluids system, an electromagnetics system, or an acoustics system. In another embodiment, the 3D numerical-method model may be processed at step 1601 of the method 1600 in the manner described hereinabove with respect to retrieving TNM model information at step 101 of the method 100 (FIG. 1).

According to an example embodiment of the method 1600, the 3D numerical-method model may be any computer-based model known to those of skill in the art. Among other examples, the numerical-method model may be a CAD model, FE model, finite volume model, Lattice Boltzman model, Statistical Energy Analyses model, or numerical method model.

An example embodiment of the method 1600 includes, prior to step 1601, generating the 3D numerical-method model. In an embodiment, the numerical-method model represents a proposed design for a physical object and the numerical-method model is created by an object designer in accordance with principles known to those of skill in the art. In such an embodiment, the method 1600 is used to determine behavior of the physical object having the proposed design. Based on results of such an embodiment, design changes may be identified and/or the design of the physical object may be optimized or verified in accordance with criteria. Then, the physical object may be manufactured in accordance with the design optimized/verified in accordance with the criteria.

In another embodiment, the numerical-method model is created prior to step 1601 to represent a real-world object and, the numerical-method model is generated by first taking measurements, *e.g.,* using one or more sensors, of the real-world object itself. In turn, the measurements are used to create the numerical-method model representing the real-world object. In this way, such an embodiment, ultimately determines behavior of the real-world object. The determined behavior may be utilized to determine design changes or improvements to the real-world object. For instance, the numerical-method model may represent a real-world bridge where the real-world bridge must now handle additional load. The method 1600 may determine a buckling behavior of the bridge responsive to this new load and, based on the determined behavior, a design change can be identified so that the bridge can handle the additional load. This design change may, in turn, be implemented in the real-world.

In an example embodiment of the method 1600, the simulation data extracted at step 1601 may include at least one of: a boundary condition, an excitation condition, an interaction condition, a physics quantity, and results from one or more numerical methods. According to another embodiment, the simulation data may be extracted from a corresponding simulation object through a physics simulation model object application programming interface (API). For instance, a computer program may be written and used to access a physics simulation model object, *e.g.,* 200 (FIG. 2). A physics simulation model database may be accessed to extract model descriptions, *e.g.,* coordinate systems, node definitions, element formulations and definitions, node set and element set definitions, connections and constraints definitions, contact definitions, boundary conditions and loading conditions. Similarly, a results database may be accessed to extract physics simulation results, *e.g.,* field outputs such as displacement and stress/strain fields, history outputs such as time dependent reaction forces, frequency dependent noise levels, sensor outputs such as connector forces. The computer program may then convert relevant information into graph/multi-graph representations, *e.g.,* 300 (FIG. 3), 400 (FIG. 4), 878 (FIG. 8), or 978a (FIG. 9), and write them as graph/multi-graph datasets.

According to an example embodiment of the method 1600, transforming the extracted 3D geometric data and simulation data into the 3D multi-graph at step 1602 may include: (1) determining at least one of a sequence representation and a connection representation associated with the 3D numerical-method model and (2) representing the determined at least one sequence representation and connection representation in the 3D multi-graph. In another embodiment, a multi-graph, *e.g.,* a 3D multi-graph, may be used to represent an assembly of physical objects connected/isolated/interacting in a physical system. For instance, an automotive door assembly may include a door frame, interior panel, exterior panel, impact beams, and reinforcement rails joined together via spot welds, nuts and bolts, and hinges, etc. A multi-graph may model each part of the assembly as a sub-graph with edge connectivities representing the type of joint or may model each sub-domain with connectivities based on a domain boundary. Moreover, a multi-graph may represent a physical system of disconnected but interacting parts. For instance, an automotive crushing column, *e.g.,* 1200 (FIG. 12A), may be designed as one single part, but may interact/contact with rigid barriers, *e.g.,* 1214a and/or 1214b (FIG. 12B). A multi-graph may model each part or object in such a physical system as a sub-graph with edge connectivities representing the type of contact/interaction or may model each sub-domain with connectivities based on a domain boundary. In an embodiment, time/frequency dependent model inputs (*e.g.,* time dependent environmental temperature conditions), time/frequency dependent outputs (*e.g.,* frequency dependent noise levels), and/or sub-graphs in a multi-graph (*e.g.,* a tree architecture of parts under an assembly) may be determined or utilized as sequence data or representations. According to another embodiment, the extracted 3D geometric data and simulation data may be transformed into the 3D multi-graph at step 1602 of the method 1600 in the manner described hereinabove with respect to converting processed TNM model information into corresponding 3D graph/multi-graph representation(s) at step 102 of the method 100.

In an example embodiment, the method 1600 may further include: (1) obtaining at least one model parameter; and (2) including a representation of the obtained at least one model parameter in the 3D multi-graph. According to one such embodiment, the obtained at least one model parameter may pertain to a node level, a local level, or a multi-graph level. In another such embodiment, the obtained at least one model parameter may include at least one of: a CAD parameter, a morphing shape parameter, an encoded latent parameter, and a non-geometric parameter. According to yet another such embodiment, the non-geometric parameter may include at least one of: a material indicator, a thickness indicator, an indication of load magnitude, an indication of load direction, an indication of load speed, a sliding interaction condition, and a physics property. In an embodiment, model parameters may be obtained by, for instance, accessing physics simulation objects, *e.g.,* model data, which may include nodal coordinates, information regarding connections between parts, and/or constraint definitions, for non-limiting examples.

According to an example embodiment of the method 1600, the one or more operators utilized at step 1603 may include at least one of: a convolutional operator, an aggregation operator, an encoding operator (*e.g.,* 852 (FIG. 8)), a decoding operator (*e.g.,* 858 (FIG. 8)), a transformer operator, a normalization operator, a concatenation operator, an Einstein summation operator, a pooling operator (*e.g.,* 972a or 972b (FIG. 9)), an unpooling operator (*e.g.,* 972c or 972d (FIG. 9)), a dense pooling operator, a non-expressive sparse pooling operator, an expressive sparse pooling operator, and an operator network. In another embodiment, operator(s) may be used (i) to determine which nodes are in a neighborhood of a node, (ii) to aggregate neighborhood information to a current local node/neighborhood, (iii) to determine importance between neighbors/neighborhoods, (iv) to encode information through, *e.g.,* nonlinear transformation, (v) to decode information into physics results fields, and/or (vi) to pool local/non-local information from a node level to higher levels.

In an example embodiment of the method 1600, the determined behavior of the physical object may include a respective local behavior solution for each of a plurality of sub-components of the physical object. The method may further include assembling each respective local behavior solution using at least one of encoding, pooling, and a regression, to determine global behavior of the physical object.

According to an example embodiment of the method 1600, processing the 3D multi-graph at step 1603 may include: iteratively (i) determining a predicted solution for the behavior of the physical object using a current neural network and current one or more operators, (ii) comparing the determined predicted solution with a solution of a numerical-method solver (*i.e.,* for the behavior of the physical object) to determine an error metric, and (iii) based on the determined error metric, updating at least one of the one or more DNN and the one or more operators, until the determined predicted solution meets at least one convergence criterion. The determined predicted solution meeting the at least one convergence criterion may be the determined behavior of the physical object. In a first iteration the current neural network and current one or more operators may be the one or more DNN and the one or more operators. In a second and subsequent iterations the current neural network and current one or more operators may be the updated at least one of the one or more DNN and the one or more operators. In one such embodiment, the updating may include performing automatic differentiation.

In an example embodiment of the method 1600, the one or more DNN may include at least one of: a FNN, *e.g.,* 700 (FIG. 7), a CNN, a GNN, *e.g.,* 800 (FIG. 8) or 900 (FIG. 9), a RNN, and a TNN.

Embodiments, *e.g.,* the method 1600, can be used as part of a manufacturing method. For example, the method 1600 can be employed in an optimization loop where the method 1600 is used to determine behavior of a real-world object. In such an embodiment, based on the determined behavior, design of a real-world object can be approved, or deficiencies can be identified. In response to identifying deficiencies, changes can be made to the design, *e.g.,* in a FE model and, after these changes are made, the new design can be evaluated using the method 1600. This process can repeat until a design that meets requirements is identified. After determining a design that meets requirements, the real-world object that meets the requirements can be manufactured. Further, embodiments may begin by measuring or obtaining data regarding a real-world object and creating the FE model representing the real-world object. This FE model can, in turn, be used in embodiments to determine behavior of the real-world object. Further, this FE model can also be used in the aforementioned optimization loop to (i) determine an improved design for the real-world object and (ii) manufacture an improved version of the real-world object, *e.g.,* a version that satisfies desired behavior criteria.

## Example Advantages

Embodiments can leverage TNM solutions to comprehensively describe a large number of physics phenomena (*e.g.,* statics, dynamics, buckling, heat transfer, acoustics, fluid dynamics, and electromagnetics) and manufacturing processes (*e.g.,* stamping, welding, or additive manufacturing).

Further, embodiments can integrate learning of 3D geometry of complex products such as parts and assemblies of parts and their connections and learning of physics-based solvers in at least the non-limiting example forms:

a) Parametrized forms such as in the form of CAD parameters, *e.g.,* length, width, radius, curvature, overall shape, etc. This form may include running a Design of Experiments (DOE) series of simulations over a parameter space.
b) Morphing parameters such as morphing vectors and ON/OFF switches of geometrical features. This form may also include running a DOE series of simulations over a morphing parameter space.
c) Non-parametrized forms such as in the form of any desired 3D discretizations, *e.g.,* meshes, tessellations, and/or other CAD representations. This form may not include running a DOE, but may use historical TNM simulation data for its training.
d) Any desired combination of forms a), b), and/or c).

Embodiments can apply to both time and frequency domain physics and can provide a continuously learnable and improvable model. With sufficient training, which may not need to happen all at once, embodiments can achieve a sufficiently high degree of accuracy for a given range of engineering interests such that embodiments can be used with confidence in, *e.g.,* early phases of design cycles when TNMs are currently not used because TNMs are too computationally expensive and cannot keep up with a rapid pace of many design changes.

Further, embodiments can accelerate adoption of physics-based simulation methods in, *e.g.,* early stages of product design cycles, and integrate, for instance, any of or a combination of the following non-limiting examples:

a) Available historical physics-based simulation data at a given enterprise or in the public domain.
b) Collective learning of both 3D geometric design representations and their traditional physics-based solutions.
c) Embodiments can continuously learn from an existing or expanding collection of traditional simulations.

Embodiments can evaluate new geometric design alternatives for comprehensive key performance indicators in seconds.

## Computer Support

Embodiments can be implemented in existing software and CAD and CAE platforms. For instance, embodiments can be implemented using features and functionalities of 3DS SIMULIA® software.

FIG. 17 is a schematic view of a computer network in which embodiments may be implemented. Client computer(s)/devices 50 and server computer(s) 60 provide processing, storage, and input/output (I/O) devices executing application programs and the like. Client computer(s)/device(s) 50 can also be linked through communications network 70 to other computing devices, including other client device(s)/processor(s) 50 and server computer(s) 60. Communications network 70 can be part of a remote access network, a global network (e.g., the Internet), cloud computing servers or service, a worldwide collection of computers, local area or wide area networks, and gateways that currently use respective protocols (*e.g.,* TCP/IP, Bluetooth®, etc.) to communicate with one another. Other electronic device/computer network architectures are suitable.

FIG. 18 is a block diagram illustrating an example embodiment of a computer node (*e.g.,* client processor(s)/device(s) 50 or server computer(s) 60) in the computer network of FIG. 17. Each computer node 50, 60 contains system bus 79, where a bus is a set of hardware lines used for data transfer among components of a computer or processing system. The bus 79 is essentially a shared conduit that connects different elements of a computer system (*e.g.,* processor, disk storage, memory, I/O ports, network ports, etc.) that enables transfer of information between the elements. Attached to the system bus 79 is I/O device interface 82 for connecting various input and output devices (*e.g.,* keyboard, mouse, display(s), printer(s), speaker(s), etc.) to the computer node 50, 60. Network interface 86 allows the computer node to connect to various other devices attached to a network (*e.g.,* network 70 of FIG. 17). Memory 90 provides volatile storage for computer software instructions 92a and data 94a used to implement an embodiment of the present disclosure (*e.g.,* the method 100 of FIG. 1, the method 1600 of FIG. 16, etc.). Disk storage 95 provides non-volatile storage for the computer software instructions 92b and data 94b used to implement an embodiment of the present disclosure. Central processor unit 84 is also attached to the system bus 79 and provides for execution of computer instructions.

In one embodiment, the processor routines 92a-92b and data 94a-94b are a computer program product (generally referenced as 92), including a computer readable medium (*e.g.,* a removable storage medium such as DVD-ROM(s), CD-ROM(s), diskette(s), tape(s), etc.) that provides at least a portion of the software instructions for the systems described herein. Computer program product 92 can be installed by any suitable software installation procedure, as is well known in the art. In another embodiment, at least a portion of the software instructions may also be downloaded over a cable, communication, and/or wireless connection. In other embodiments, the disclosed programs are a computer program propagated signal product embodied on a propagated signal on a propagation medium (*e.g.,* a radio wave, an infrared wave, a laser wave, a sound wave, or an electrical wave propagated over a global network such as the Internet, or other network(s)). Such carrier medium or signals provide at least a portion of the software instructions for the present disclosure routines/program 92.

In alternate embodiments, the propagated signal is an analog carrier wave or digital signal carried on the propagated medium. For example, the propagated signal may be a digitized signal propagated over a global network (*e.g.,* the Internet), a telecommunications network, or other network (such as network 70 of FIG. 17). In one embodiment, the propagated signal is a signal that is transmitted over the propagation medium over a period of time, such as the instructions for a software application sent in packets over a network over a period of milliseconds, seconds, minutes, or longer. In another embodiment, the computer readable medium of the computer program product 92 is a propagation medium that the computer system 50 may receive and read, such as by receiving the propagation medium and identifying a propagated signal embodied in the propagation medium, as described above for computer program propagated signal product.

Generally speaking, the term "carrier medium" or transient carrier encompasses the foregoing transient signals, propagated signals, propagated medium, storage medium, and the like.

In other embodiments, the program product 92 may be implemented as a so-called Software as a Service (SaaS), or other installation or communication supporting end-users.

Embodiments or aspects thereof may be implemented in the form of hardware including but not limited to hardware circuitry, firmware, or software. If implemented in software, the software may be stored on any non-transient computer readable medium that is configured to enable a processor to load the software or subsets of instructions thereof. The processor then executes the instructions and is configured to operate or cause an apparatus to operate in a manner as described herein.

Further, hardware, firmware, software, routines, or instructions may be described herein as performing certain actions and/or functions of the data processors. However, it should be appreciated that such descriptions contained herein are merely for convenience and that such actions in fact result from computing devices, processors, controllers, or other devices executing the firmware, software, routines, instructions, etc.

It should be understood that the flow diagrams, block diagrams, and network diagrams may include more or fewer elements, be arranged differently, or be represented differently. But it further should be understood that certain implementations may dictate the block and network diagrams and the number of block and network diagrams illustrating the execution of the embodiments be implemented in a particular way.

Accordingly, further embodiments may also be implemented in a variety of computer architectures, physical, virtual, cloud computers, and/or some combination thereof, and, thus, the data processors described herein are intended for purposes of illustration only and not as a limitation of the embodiments.

The teachings of all patents, published applications, and references cited herein are incorporated by reference in their entirety.

While example embodiments have been particularly shown and described, it will be understood by those skilled in the art that various changes in form and details may be made therein without departing from the scope of the embodiments encompassed by the appended claims.

For example, the foregoing description and details of embodiments in the figures reference Applicant-Assignee (Dassault Systèmes Americas Corporation) and Dassault Systèmes tools and platforms, for purposes of illustration and not limitation. Other similar tools and platforms are also suitable.

## References

Ferguson, K., et al., "Scalar field prediction on topologically-varying graphs using spectral shape encoding," International Design Engineering Technical Conferences and Computers and Information in Engineering Conference, Vol. 86229, American Society of Mechanical Engineers, 2022.

Mozaffar, M., et al., "Geometry-agnostic data-driven thermal modeling of additive manufacturing processes using graph neural networks," Additive Manufacturing 48 (2021): 102449.

Choi, Y., et al., "Graph neural network-based surrogate model for granular flows," Computers and Geotechnics 166 (2024): 106015.

Gladstone, R.J., et al., "Mesh-based GNN surrogates for time-independent PDEs," Scientific Reports 14.1 (2024): 3394.

Pfaff, T., et al., "Learning mesh-based simulation with graph networks," International Conference on Learning Representations, 2020.

**Claims**

1. A computer-implemented method for neural network based behavior determination of a physical object, the computer-implemented method comprising, by a processor:

   processing a three-dimensional (3D) numerical-method model representing the physical object to extract (i) 3D geometric data associated with the physical object and (ii) simulation data;

   transforming the extracted 3D geometric data and simulation data into a 3D multi-graph; and

   processing the 3D multi-graph with one or more deep neural networks (DNN) and one or more operators to determine behavior of the physical object.

2. The computer-implemented method of Claim 1, wherein the 3D numerical-method model represents an assembly composed of multiple parts, connections between the multiple parts, and interactions between the multiple parts.

3. The computer-implemented method of Claim 2, wherein the assembly is a vehicle, an aircraft, an antenna, a mitral valve, a structural system, a fluids system, an electromagnetics system, or an acoustics system.

4. The computer-implemented method of any one of Claims 1 to 3, wherein the 3D numerical-method model is a computer-aided design (CAD) model, finite element (FE) model, finite volume model, Lattice Boltzman model, Statistical Energy Analyses model, or numerical method model.

5. The computer-implemented method of any one of Claims 1 to 4, wherein the simulation data includes at least one of: a boundary condition, an excitation condition, an interaction condition, a physics quantity, and results from one or more numerical methods.

6. The computer-implemented method of any one of Claims 1 to 5, wherein transforming the extracted 3D geometric data and simulation data into the 3D multi-graph includes:

   determining at least one of a sequence representation and a connection representation associated with the 3D numerical-method model; and

   representing the determined at least one sequence representation and connection representation in the 3D multi-graph.

7. The computer-implemented method of any one of Claims 1 to 6, further comprising:

   obtaining at least one model parameter; and

   including a representation of the obtained at least one model parameter in the 3D multi-graph, optionally the obtained at least one model parameter pertaining to a node level, a local level, or a multi-graph level.

8. The computer-implemented method of any one of Claims 1 to 6, further comprising:

   obtaining at least one model parameter; and

   including a representation of the obtained at least one model parameter in the 3D multi-graph, wherein the obtained at least one model parameter includes at least one of: a CAD parameter, a morphing shape parameter, an encoded latent parameter, and a non-geometric parameter, optionally the non-geometric parameter including at least one of: a material indicator, a thickness indicator, an indication of load magnitude, an indication of load direction, an indication of load speed, a sliding interaction condition, and a physics property.

9. The computer-implemented method of any one of Claims 1 to 8, wherein the one or more operators include at least one of: a convolutional operator, an aggregation operator, an encoding operator, a decoding operator, a transformer operator, a normalization operator, a concatenation operator, an Einstein summation operator, a pooling operator, an unpooling operator, a dense pooling operator, a non-expressive sparse pooling operator, an expressive sparse pooling operator, and an operator network.

10. The computer-implemented method of any one of Claim 1 to 9, wherein the determined behavior of the physical object includes a respective local behavior solution for each of a plurality of sub-components of the physical object, and further comprising:

assembling each respective local behavior solution using at least one of encoding, pooling, and a regression, to determine global behavior of the physical object.

11. The computer-implemented method of any one of Claims 1 to 10, wherein processing the 3D multi-graph includes: iteratively (i) determining a predicted solution for the behavior of the physical object using a current neural network and current one or more operators, (ii) comparing the determined predicted solution with a solution of a numerical-method solver to determine an error metric, and (iii) based on the determined error metric, updating at least one of the one or more DNN and the one or more operators, until the determined predicted solution meets at least one convergence criterion, wherein (a) the determined predicted solution meeting the at least one convergence criterion is the determined behavior of the physical object (b) in a first iteration the current neural network and current one or more operators are the one or more DNN and the one or more operators and, (c) in a second and subsequent iterations the current neural network and current one or more operators are the updated at least one of the one or more DNN and the one or more operators, optionally the updating including performing automatic differentiation.

12. The computer-implemented method of any one of Claims 1 to 11, wherein the one or more DNN includes at least one of: a Feedforward Neural Network (FNN), a Convolutional Neural Network (CNN), a Graph Neural Network (GNN), a Recurrent Neural Network (RNN), and a Transformer Neural Network (TNN).

13. A computer program comprising computer code instructions which, when executed by a computer, cause the computer to perform the method according to any one of Claims 1 to 12.

14. A computer readable storage medium having recorded thereon a computer program of claim 13.

15. A computer-based system for neural network based behavior determination of a physical object, the computer-based system comprising:

a processor; and
a memory operatively coupled to the processor, the memory having recorded thereon the computer program of claim 13.

100

101 — Retrieve and process TNM models of the arbitrary number of parts product being modeled to extract geometry, mesh, boundary conditions and excitations

102 — Convert processed model information into a corresponding 3D multi graph, sequence and connection representations of the model; apply TNM model features

108 — Add optional model parameters in the form of CAD parameters, morphing parameters, encoded latent parameters as well as non-geometric parameters such as material choices or load magnitudes

103 — Apply deep neural networks and operators to process localized model representations, considering neighborhood information

104 — Assemble localized solution to form global solutions via dedicated encoding, pooling and regression methods

107 — Automatic differentiation and neural networks and operators update

105 — Calculate model loss comparing to TNM solver solutions

Iterate until model convergence 106

\*TNM = Traditional Numerical Method
\*\*CAD = computer-aided design

FIG. 1

200

NID_1    NID_4    NID_6

EID_1    EID_2

NID_2    NID_3    NID_5

FIG. 2

Contact / Constraint 344a-344n

Part_1    Part_2

342a      342b

FIG. 3

300

FIG. 4

FIG. 5A

FIG. 5B

FIG. 5C

FIG. 6B

FIG. 6A

24

FIG. 7

FIG. 8

FIG. 9

FIG. 10A

FIG. 10B

FIG. 10C

1100a

Y

Z X

1188

FIG. 11A

1100b

Y

Z X

1188

FIG. 11B

FIG. 12A

1200

EP 4 645 154 A1

FIG. 12B

FIG. 12C

FIG. 12D

FIG. 13

FIG. 14

1500a

Y
X
1588

FIG. 15A

1500b

Y
X
1588

FIG. 15B

EP 4 645 154 A1

1600

1601 — Process a three-dimensional (3D) numerical-method model representing a physical object to extract (i) 3D geometric data associated with the physical object and (ii) simulation data

1602 — Transform the extracted 3D geometric data and simulation data into a 3D multi-graph

1603 — Process the 3D multi-graph with one or more deep neural networks (DNN) and one or more operators to determine behavior of the physical object

FIG. 16

FIG. 17

FIG. 18

## EUROPEAN SEARCH REPORT

**Application Number**

EP 25 17 3518

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/359788 A1 (SANCHEZ ALVARO [GB] ET AL) 9 November 2023 (2023-11-09)<br>* paragraph [0005] - paragraph [0036] *<br>* paragraph [0103] - paragraph [0158]; figures 1, 2, 3, 9 * | 1-15 | INV.<br>G06F30/23<br>G06F30/27 |
| X,D | GLADSTONE RINI JASMINE ET AL: "Mesh-based GNN surrogates for time-independent PDEs", SCIENTIFIC REPORTS, [Online] vol. 14, no. 1, 9 February 2024 (2024-02-09), pages 3394-3394, XP093295484, US ISSN: 2045-2322, DOI: 10.1038/s41598-024-53185-y Retrieved from the Internet: URL:https://www.nature.com/articles/s41598 -024-53185-y.pdf> [retrieved on 2025-07-14]<br>* abstract *<br>* page 2 - page 8; figures 1, 2 *<br>* page 12 * | 1-15 | |
| A | SAURABH DESHPANDE ET AL: "Convolution, aggregation and attention based deep neural networks for accelerating simulations in mechanics", ARXIV.ORG, CORNELL UNIVERSITY LIBRARY, 201 OLIN LIBRARY CORNELL UNIVERSITY ITHACA, NY 14853, [Online] 24 March 2023 (2023-03-24), XP091467448, DOI: 10.3389/FMATS.2023.1128954 [retrieved on 2025-07-14]<br>* abstract *<br>* sections 2-3; page 3 - page 9; figures 1, 3, 5 * | 1-15 | TECHNICAL FIELDS SEARCHED (IPC)<br><br>G06F |

-/--

The present search report has been drawn up for all claims

| Place of search | Date of completion of the search | Examiner |
|---|---|---|
| Munich | 15 July 2025 | Lindner, Anja |

| | Europäisches Patentamt |
| --- | --- |
| | European Patent Office |
| | Office européen des brevets |

# EUROPEAN SEARCH REPORT

**Application Number**

EP 25 17 3518

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| A | SAURABH DESHPANDE ET AL: "MAgNET: A Graph U-Net Architecture for Mesh-Based Simulations", ARXIV.ORG, CORNELL UNIVERSITY LIBRARY, 201 OLIN LIBRARY CORNELL UNIVERSITY ITHACA, NY 14853, [Online] 2 April 2024 (2024-04-02), XP091716154, DOI: 10.1016/J.ENGAPPAI.2024.108055 [retrieved on 2025-07-14] * abstract * * section 2; page 4 - page 16; figures 1, 2, 5, 6, 8 * * page 21; figure 13 * ----- | 1-15 | |
| A | FU XINGYU ET AL: "An finite element analysis surrogate model with boundary oriented graph embedding approach for rapid design", JOURNAL OF COMPUTATIONAL DESIGN AND ENGINEERING, [Online] vol. 10, no. 3, 25 March 2023 (2023-03-25) , pages 1026-1046, XP093295614, ISSN: 2288-5048, DOI: 10.1093/jcde/qwad025 Retrieved from the Internet: URL:https://watermark.silverchair.com/qwad 025.pdf?token=AQECAHi208BE49Ooan9kkhW_Ercy 7Dm3ZL_9Cf3qfKAc485ysgAAA2QwggNgBgkqhkiG9w 0BBwagggNRMIIDTQIBADCCA0YGCSqGSIb3DQEHATAe BglghkgBZQMEAS4wEQQMO-OUGjEOjJq_v8rqAgEQgI IDF1LRAs-rT-T6GDgLrS-mPYz5S3G05TYoNJNLqbui KZP2-iZtXRgwam-IXKk15DMKVZRfdtK94gz4rmuKS7 QWO-Q1C3Nn> [retrieved on 2025-07-14] * abstract * * sections 1-2; page 1026 - page 1032; figures 1, 2, 3 * ----- | 1-15 | TECHNICAL FIELDS SEARCHED (IPC) |

The present search report has been drawn up for all claims

| Place of search | Date of completion of the search | Examiner |
| --- | --- | --- |
| Munich | 15 July 2025 | Lindner, Anja |

EPO FORM 1503 03.82 (P04C01)

page 2 of 2

# EP 4 645 154 A1

## ANNEX TO THE EUROPEAN SEARCH REPORT
## ON EUROPEAN PATENT APPLICATION NO.

EP 25 17 3518

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2025

| Patent document cited in search report | Publication date | Patent family member(s) | Publication date |
|---|---|---|---|
| US 2023359788 A1 | 09-11-2023 | CN 116324795 A | 23-06-2023 |
| | | EP 4205014 A1 | 05-07-2023 |
| | | JP 7492083 B2 | 28-05-2024 |
| | | JP 2023544175 A | 20-10-2023 |
| | | KR 20230065343 A | 11-05-2023 |
| | | US 2023359788 A1 | 09-11-2023 |
| | | WO 2022069740 A1 | 07-04-2022 |

EPO FORM P0459

For more details about this annex : see Official Journal of the European Patent Office, No. 12/82

42

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Scalar field prediction on topologically-varying graphs using spectral shape encoding. **FERGUSON, K. et al.** International Design Engineering Technical Conferences and Computers and Information in Engineering Conference. American Society of Mechanical Engineers, 2022, vol. 86229
- **MOZAFFAR, M. et al.** Geometry-agnostic data-driven thermal modeling of additive manufacturing processes using graph neural networks. *Additive Manufacturing*, 2021, vol. 48, 102449

- **CHOI, Y. et al.** Graph neural network-based surrogate model for granular flows. *Computers and Geotechnics*, 2024, vol. 166, 106015
- **GLADSTONE, R.J. et al.** Mesh-based GNN surrogates for time-independent PDEs. *Scientific Reports*, 2024, vol. 14 (1), 3394
- **PFAFF, T. et al.** Learning mesh-based simulation with graph networks. *International Conference on Learning Representations*, 2020